# EUROPEAN PATENT APPLICATION

(11) **EP 4 664 240 A1**
(43) Date of publication of application: **17.12.2025**
(21) Application number: 25718933.2
(22) Date of filing: 26.03.2025
(51) Int. Cl.: G06F 1/16

(54) **FOLDABLE ELECTRONIC DEVICE**

(30) Priority: 22.04.2024 KR 20240053186; 13.05.2024 KR 20240062534
(71) Applicant: Samsung Electronics Co., Ltd., Suwon-si, Gyeonggi-do 16677 (KR)
(72) Inventor: JUNG, Soli, Suwon-si Gyeonggi-do 16677 (KR); LEE, Junyoung, Suwon-si Gyeonggi-do 16677 (KR); KIM, Jihoon, Suwon-si Gyeonggi-do 16677 (KR); YOON, Byounguk, Suwon-si Gyeonggi-do 16677 (KR)
(74) Representative: Gulde & Partner
(86) International application number: PCT/KR2025/003862
(87) International publication number: WO 2025/225898

(57) **Abstract**

According to an embodiment, an electronic device includes: a housing which includes a first housing, a second housing, and a third housing; a first hinge assembly which rotatably connects the first housing and the second housing; a second hinge assembly which rotatably connects the second housing and the third housing; a first hinge housing which accommodates at least a part of the first hinge assembly; a second hinge housing which accommodates at least a part of the second hinge assembly and has a width wider than the first hinge housing; and a plurality of protrusions which are disposed on at least one of an inner side of the second housing that faces an outer side of the second hinge housing or an inner side of the third housing that faces the outer side of the second hinge housing in an unfolded state of the electronic device, and protrude **in** a direction facing the second hinge housing.

## Description

### [Technical Field]

The disclosure relates to a foldable electronic device.

### [Background Art]

Mobile electronic devices such as smartphones may provide various functions, such as communication, replaying videos, searching through the Internet, etc., based on various applications. Users may wish to use the above-described various functions through wider screens, but, as screens are larger, portability may be degraded. Accordingly, foldable electronic devices which may enhance portability by using structures folded at least one time have been proposed.

The above-described information is provided as a related-art technology for the purpose of assisting in understanding the disclosure. Any assertion or decision is not presented as to what content of the above-described contents is applied as prior art in relation to the disclosure.

### [Disclosure of Invention]

### [Solution to Problem]

According to an embodiment, an electronic device may include a foldable housing which includes a first housing, a second housing, and a third housing. The electronic device may include a first hinge structure which rotatably connects the first housing and the second housing. The electronic device may include a second hinge structure which rotatably connects the second housing and the third housing. The electronic device may include a first hinge housing which accommodates at least a part of the first hinge structure. The electronic device may include a second hinge housing which accommodates at least a part of the second hinge structure and has a width wider than the first hinge housing. The electronic device may include a plurality of protrusions which are disposed on at least one of an inner surface of the second housing or an inner surface of the third housing, and protrude in a direction facing the second hinge housing in an unfolded state of the electronic device.

According to an embodiment, a multi-foldable electronic device may include a housing which includes a first housing, a second housing, and a third housing. The multi-foldable electronic device may include a first hinge assembly which rotatably connects the first housing and the second housing. The multi-foldable electronic device may include a second hinge assembly which rotatably connects the second housing and the third housing. The multi-foldable electronic device may include a first hinge housing which accommodates at least a part of the first hinge assembly. The multi-foldable electronic device may include a second hinge housing which accommodates at least a part of the second hinge assembly and has a width wider than the first hinge housing. The multi-foldable electronic device may include a first dustproof member which is disposed on at least one of an inner side of the first housing or a first inner side of the second housing which faces an outer side of the first hinge housing in an unfolded state of the electronic device. The multi-foldable electronic device may include a plurality of second dustproof members which are disposed on at least one of a second inner side of the second housing that faces an outer side of the second hinge housing or an inner side of the third housing that faces the outer side of the second hinge housing, and protrude in a direction facing the second hinge housing.

### [Brief Description of Drawings]

FIG. 1 is a perspective view of a front surface of an electronic device according to an embodiment.
FIG. 2 is a perspective view of a rear surface of the electronic device according to an embodiment.
FIG. 3 is a top view of the electronic device according to an embodiment.
FIG. 4 is a perspective view illustrating a state in which at least a part of an electronic device is unfolded according to an embodiment.
FIG. 5 is a perspective view illustrating a folded state of the electronic device according to an embodiment.
FIG. 6 is an exploded perspective view illustrating a housing and a second hinge housing according to an embodiment.
FIG. 7 is a view illustrating a folded state of an electronic device according to an embodiment.
FIG. 8 is a view illustrating an unfolded state of the electronic device according to an embodiment.
FIG. 9 is a cross-sectional view illustrating a part of the electronic device including a first hinge housing and a sweeper according to an embodiment.
FIG. 10 is a cross-sectional view illustrating a part of the electronic device including the second hinge housing and a protrusion according to an embodiment.
FIG. 11 is a top view of the second housing and a third housing including a protrusion according to an embodiment.
FIG. 12 is a perspective view illustrating the second housing and the third housing including the protrusion according to an embodiment.
FIG. 13 is a view illustrating a second hinge housing in the embodiment of FIG. 12.
FIG. 14 is a view to explain shape of protrusions according to various embodiments.
FIG. 15 is a cross-sectional view illustrating a part of the electronic device including the second hinge housing and a sealing member according to an embodiment.
FIG. 16 is a perspective view illustrating a part of the electronic device including the second hinge housing and the sealing member.
FIG. 17 is a cross-sectional view illustrating a part of an electronic device including a second hinge housing and a brush.
FIG. 18 is a perspective view illustrating a part of the electronic device including the second hinge housing and the brush.
FIG. 19 is a view to explain a relationship between a plurality of protrusions and a second hinge housing according to an unfolded state of an electronic device according to an embodiment.
FIG. 20 is a view to explain a relationship between a plurality of protrusions and a second hinge housing according to a state of an electronic device according to an embodiment.
FIG. 21 is a view to explain the relationship between the plurality of protrusions and the second hinge housing according to a state of the electronic device according to an embodiment.
FIG. 22 is a view to explain the relationship between the plurality of protrusions and the second hinge housing according to a state of the electronic device according to an embodiment.
FIG. 23 is a view to explain the relationship between the plurality of protrusions and the second hinge housing according to a state of the electronic device according to an embodiment.
FIG. 24 is a view to explain positions of a plurality of protrusions according to a state of an electronic device according to an embodiment.
FIG. 25 is a view illustrating a protrusion including a curved surface according to an embodiment.
FIG. 26 is a view to explain a plurality of protrusions including curved surfaces having curvatures according to an embodiment.
FIG. 27 is a view to explain a shape of a protrusion according to an embodiment.
FIG. 28 is a view to explain a shape of a protrusion according to an embodiment.
FIG. 29 is a view illustrating a protrusion including an inclined surface according to an embodiment.
FIG. 30 is a perspective view to explain a partition according to an embodiment.
FIG. 31 is a perspective view to explain partitions arranged in parallel according to an embodiment.
FIG. 32 is a view to explain a relationship between a partition and a flexible printed circuit board according to an embodiment.
FIG. 33 is a view to explain a thickness of a partition according to an embodiment.
FIG. 34 is a view to explain a bump disposed on a partition according to an embodiment.
FIG. 35 is a view to explain a partition and a flexible printed circuit board according to an embodiment.
FIG. 36 is a cross-sectional view to explain a convex portion disposed in a second hinge housing according to an embodiment.
FIG. 37 is a cross-sectional view to explain a convex portion according to an embodiment.
FIG. 38 is a cross-sectional view to explain a convex portion according to an embodiment.

### [Mode for the Invention]

Hereinafter, various embodiments of the disclosure will be described with reference to the accompanying drawings, so that a person skilled in the art can easily embody the disclosure. However, the disclosed embodiments may be implemented in various forms and the disclosure is not limited to embodiments described herein.

An electronic device according to various embodiments of the disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable devices may include at least one of accessories (for example, watches, rings, bracelets, ankle bracelets, necklaces, glasses, contact lenses, head-mounted-devices (HMDs), etc.), fabric- or clothing-mounted devices (for example, electronic apparels), body-mounted devices (for example, skin pads, tattoos, etc.), or bio-implantable circuits.

According to an embodiment, the electronic device may be a home appliance. The home appliance may include at least one of, for example, televisions (TVs), digital video disk (DVD) players, audios, set-top boxes, home automation control panels, security control panels, TV boxes, game consoles, electronic dictionaries, electronic keys, camcorders, or electronic picture frames.

According to an embodiment, the electronic device may include at least one of medical devices (for example, various portable medical measurement devices (for example, a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, global navigation satellite systems (GNSS), event data recorders (EDRs), flight data recorders (FDRs), vehicle infotainment devices, electronic equipment for vessels (for example, navigation systems and gyrocompasses), avionics, security devices, head units for vehicles, industrial or home robots, automatic teller's machines (ATMs) of financial institutions, points of sales (POSs) of stores, or Internet of things (for example, various sensors, electricity or gas meters, sprinkler devices, fire alarms, thermostats, street lamps, exercise equipment, or the like).

According to an embodiment, the electronic device may include at least one of electronic boards, electronic signature receiving devices, projectors, or various measuring instruments (for example, water meters, electricity meters, gas meters, or wave meters). In various embodiments, the electronic device may be one or a combination of two or more devices of the above-mentioned devices. According to an embodiment, the electronic device may be a flexible electronic device. Also, the electronic device according to various embodiments of the disclosure is not limited to the above-mentioned devices, and may include new electronic devices according to technology development.

According to an embodiment, in an electronic device (for example, a foldable electronic device and/or a multi-foldable electronic device) in which mechanical structures perform relative motions, the relative motions of the structures may be performed smoothly by ensuring a predetermined gap between the mechanical structures. However, the gap between the mechanical structures may serve as a passage through which external foreign substances enter. For example, foreign substances may enter through a gap between a housing (for example, a foldable housing) and a hinge housing.

Foreign substances entering the electronic device may cause damages to the mechanical structures (for example, a hinge housing, a hinge assembly, a hinge structure) which perform folding or rotating operations.

According to various embodiments of the disclosure, there is provided an electronic device which prevents or reduces damages to components such as mechanical structures by blocking or removing external foreign substances flowing to the inside of the electronic device, or slowing down the speed of inflow of foreign substances to the inside of the electronic device, or improving the outflow of foreign substances that flowed to the inside of the electronic device.

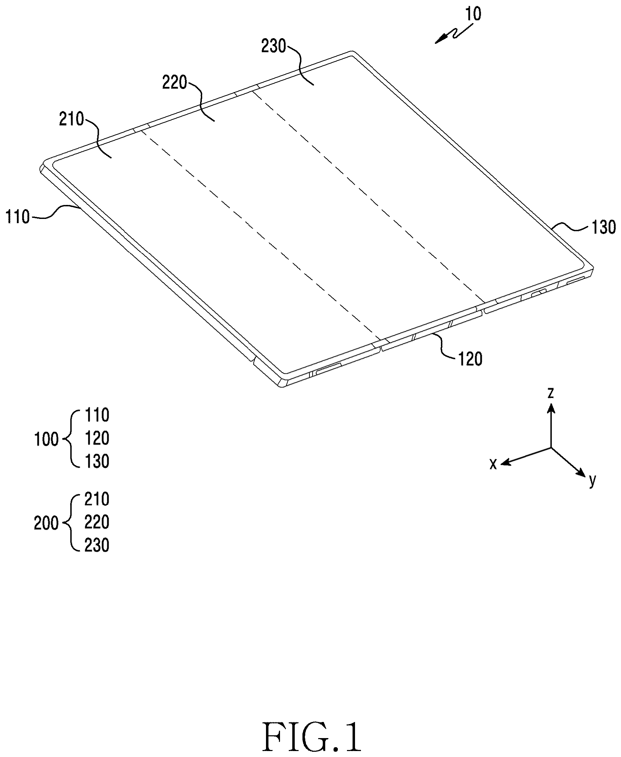

FIG. 1 is a perspective view of a front surface of an electronic device according to an embodiment.

The components of the electronic device 10 of FIG. 1 may be referenced to the components of other drawings. The same terms and/or the same reference numerals are used for the same components or substantially the same components as the components of other drawings, and a redundant explanation is omitted.

Referring to FIG. 1, the electronic device 10 according to an embodiment may include a housing 100 (for example, a foldable housing) and a flexible display 200 (for example, a first display) which is disposed in the housing 100. In the disclosure, a surface on which the flexible display 200 is disposed is defined as a front surface of the electronic device 10. In addition, the opposite surface of the front surface is defined as a rear surface of the electronic device 10. In addition, a side surrounding a space between the front surface and the rear surface is defined as a side of the electronic device 10. In the disclosure, the housing 100 may be referred to as a foldable housing.

According to an embodiment, the housing 100 may include a first housing 110, a second housing 120, and a third housing 130. The first housing 110, the second housing 120, and the third housing 130 may form at least a part of the rear surface of the electronic device 10 and at least a part of the side. In an embodiment, at least one of the first housing 110, the second housing 120, or the third housing 130 may include a conductive material (for example, metal).

According to an embodiment, the electronic device 10 may have an unfolded state, a folded state and/or an intermediate state.

In an embodiment, the unfolded state may include a state in which at least a part of the housing 100 is unfolded. The unfolded state may include a first unfolded state in which the first housing 110 and the second housing 120 are disposed to form an angle of 180 degrees, and the second housing 120 and the third housing 130 are disposed to form an angle of 180 degrees.

In an embodiment, the unfolded state may include a second unfolded state in which the first housing 110 and the second housing 120 are disposed to form an angle of 180 degrees with each other, and the second housing 120 and the third housing 130 are disposed to form a certain angle with each other.

In an embodiment, the unfolded state may include a third unfolded state in which the first housing 110 and the second housing 120 are disposed to form a certain angle with each other, and the second housing 120 and the third housing 130 are disposed to form an angle of 180 degrees with each other.

In an embodiment, the unfolded state may include a fourth unfolded state in which the first housing 110 and the second housing 120 are disposed to form an angle of 180 degrees with each other, and the second housing 120 and the third housing 130 are disposed to face each other.

In an embodiment, the unfolded state may include a fifth unfolded state in which the first housing 110 and the second housing 120 are disposed to face each other, and the second housing 120 and the third housing 130 are disposed to form an angle of 180 degrees with each other.

In an embodiment, the folded state may include a state in which the housing 100 is folded. In an embodiment, the folded state may include a first folded state in which the second housing 120 and the first housing 110 are disposed to face each other, and the second housing 120 and the third housing 130 are disposed to form a certain angle with each other.

In an embodiment, the folded state may include a second folded state in which the second housing 120 and the first housing 110 are disposed to face each other, and the second housing 120 and the third housing 130 are disposed to face each other. In the second folded state, the third housing 130 and the first housing 110 may be disposed to face each other.

In an embodiment, the folded state may include a third folded state in which the third housing 130 and the second housing 120 are disposed to face each other, and the second housing 120 and the first housing 110 are disposed to form a certain angle with each other.

In an embodiment, the intermediate state may include a state in which the first housing 110 and the second housing 120 are disposed to form a certain angle with each other, and the second housing 120 and the third housing 130 are disposed to form a certain angle. A specific angle formed by the first housing 110 and the second housing 120 and/or a specific angle formed by the second housing 120 and the third housing 130 in the folded state and the unfolded state is introduced for the convenience of explanation and may comprise an angle that is less than 180° and more than 0° and the disclosure is not limited thereto.

According to an embodiment, at least a part of the housing 100 may be formed with at least one of a metallic material (for example titanium and/or aluminum) having rigidity of a level selected to support the flexible display 200, or a nonmetallic material.

According to an embodiment, the flexible display 200 may be disposed in the housing 100. For example, the flexible display 200 may be seated on a recess which is formed by the housing 100, and may form most of the front surface of the electronic device 10. In an embodiment, the flexible display 200 may include a first region 210, a second region 220, and a third region 230. The first region 210 and the second region 220 of the flexible display 200 may be divided with reference to a first axis along which the electronic device 10 is folded or unfolded. The second region 220 and the third region 230 of the flexible display 200 may be divided with reference to a second axis along which the electronic device 10 is folded or unfolded. The first axis and the second axis may be parallel to each other.

According to an embodiment, divided regions of the flexible display 200 as shown in FIG. 1 are merely an example, and in an embodiment, the flexible display 200 may be divided into four or more regions according to a structure or a function. For example, the flexible display 200 may be divided into a first folding region which has a certain curvature when the electronic device 10 is folded with reference to a first folding axis (for example, the first axis), a first region 210 which is adjacent to the first housing 110 with reference to the folding region, a second region 220 which is adjacent to the second housing 120, a second folding region which has a certain curvature when the electronic device 10 is folded with reference to a second folding axis (for example, the second axis), and a third region 230 which is adjacent to the third housing 130. In an example, the first region 210 and the second region 220 may have a substantially symmetrical shape with reference to the first folding axis (for example, the first axis). In an example, the second region 220 and the third region 230 may have a substantially symmetrical shape with reference to the second folding axis (for example, the second axis).

According to an embodiment, arrangement structures of the first region 210, the second region 220, and the third region 230 of the flexible display 200 may vary according to a state of the electronic device 10. For example, when the electronic device 10 is in the unfolded state, the first region 210 and the second region 220 of the flexible display 200 may form an angle of 180 degrees with each other. For example, when the electronic device 10 is in the unfolded state, the second region 220 and the third region 230 of the flexible display 200 may form an angle of 180 degrees with each other.

According to an embodiment, when the electronic device 10 is in the unfolded state, the first region 210 and the second region 220 of the flexible display 200 may face the same direction (for example, the +z direction). For example, when the electronic device 10 is in the unfolded state, the second region 220 and the third region 230 of the flexible display 200 may face the same direction (for example, the +z direction). For example, when the electronic device 10 is in the unfolded state, the first region 210, the second region 220, and the third region 230 of the flexible display 200 may face the same direction (for example, the +z direction).

According to an embodiment, when the electronic device 10 is in the folded state, the first region 210 and the second region 220 of the flexible display 200 may form a narrow angle (for example, between 0 and 10 degrees) with each other, and may face each other. In an embodiment, when the electronic device 10 is in the folded state, the second region 220 and the third region 230 of the flexible display 200 may form a narrow angle (for example, between 0 and 10 degrees) with each other, and may face each other. For example, when the electronic device 10 is in the folded state, the first region 210 and the third region 230 of the flexible display 200 may face the same direction (for example, the -z direction).

According to an embodiment, when the electronic device 10 is in the intermediate state, the first region 210 and the second region 220 of the flexible display 200 may form an angle that is larger than when the electronic device is in the folded state and smaller than when the electronic device is in the unfolded state, and the second region 220 and the third region 230 of the flexible display 200 may form an angle that is larger than when the electronic device is in the folded state and smaller than when the electronic device is in the unfolded state. For example, the flexible display 200 may have at least a part formed of a curved surface having a certain curvature, and the curvature in this case may be smaller than when the flexible display 200 is in the folded state.

However, specific angles formed by the first region 210, the second region 220, and the third region 230 in the folded state and the unfolded state as described above are just for the convenience of explanation, and the disclosure is not limited thereto.

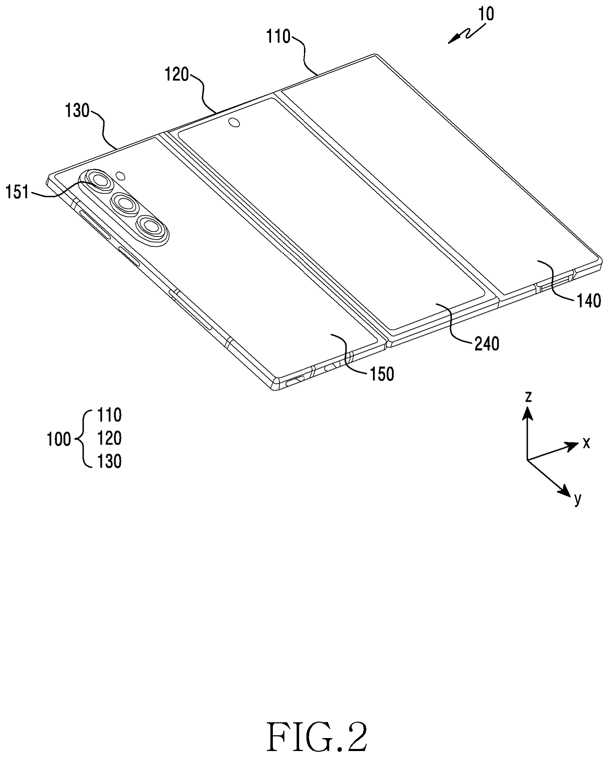

FIG. 2 is a perspective view of the rear surface of the electronic device according to an embodiment.

The components of the electronic device 10 of FIG. 2 may be referenced to the components of other drawings. The same terms and/or the same reference numerals are used for the same components or substantially the same components as the components of other drawings, and a redundant explanation is omitted.

According to an embodiment, a first rear surface cover 140 may be coupled with the housing 100 to form at least a part of the rear surface of the electronic device 10. For example, the first rear surface cover 140 may be coupled with the first housing 110 to form at least a part of the rear surface of the electronic device 10. According to an embodiment, a second rear surface cover 150 may be coupled with the housing 100 to form at least a part of the rear surface of the electronic device 10. For example, the second rear surface cover 150 may be coupled with the third housing 130 to form at least a part of the rear surface of the electronic device 10. In an embodiment, it is illustrated that the housing 100 of the electronic device 10 is a component that is separated from the first rear surface cover 140, but in an embodiment, the housing 100 may be integrally formed with the first rear surface cover 140.

According to an embodiment, at least one of the first rear surface cover 140 or the second rear surface cover 150 may include an insulating material (for example, a plastic resin). According to an embodiment, at least one of the first rear surface cover 140 or the second rear surface cover 150 may include a conductive material (for example, metal). For example, at least one of the first rear surface cover 140 or the second rear surface cover 150 may include at least one of titanium or aluminum.

According to an embodiment, the electronic device 10 may include a camera hole 151 and/or a sub display 240 (for example, a second display). In an embodiment, the camera hole 151 may be a hole through which at least one lens of a camera device is exposed. External light of the electronic device 10 may enter the camera device disposed in the electronic device 10 through the camera hole 151. In an embodiment, the sub display 240 may display a designated object (for example, a current time, a remaining battery capacity of the electronic device 10) when the electronic device 10 is in the folded state.

According to an embodiment, the housing 100, the first rear surface cover 140, the second rear surface cover 150, and the display (the flexible display 200 of FIG. 1 and/or the sub display 240) may form an inner space in which various components (for example, a printed circuit board and/or a battery) of the electronic device 10 are disposed.

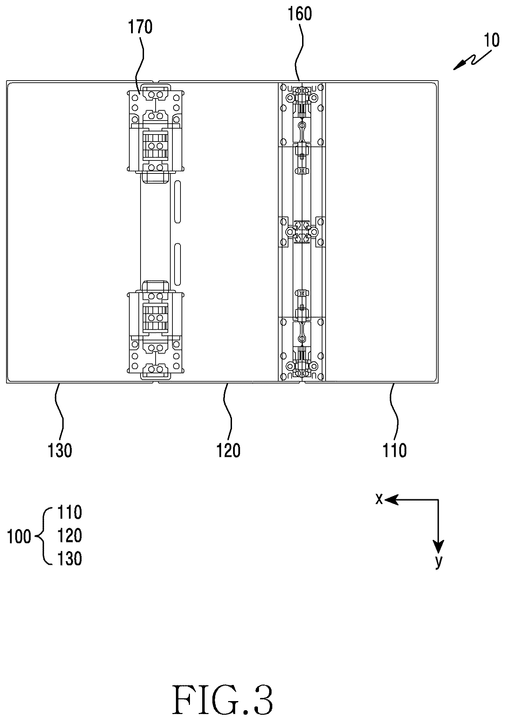

FIG. 3 is a top view of the electronic device according to an embodiment.

The components of FIG. 3 may be referenced to the components of other drawings. The same terms and/or the same reference numerals are used for the same components or substantially the same components as the components of other drawings, and a redundant explanation is omitted.

Referring to FIG. 3, the electronic device 10 according to an embodiment may include a first hinge assembly 160 which rotatably connects the first housing 110 and the second housing 120, and a second hinge assembly 170 which rotatably connects the second housing 120 and the third housing 130. In the disclosure, the first hinge assembly 160 may be referred to as a first hinge structure and the second hinge assembly 170 may be referred to as a second hinge structure. In an example, a width of the second hinge assembly 170 may be larger than a width of the first hinge assembly 160.

According to an embodiment, the first hinge assembly 160 may be accommodated in the first housing 110 and the second housing 120 at least in part. For example, the first hinge assembly 160 may overlap the first housing 110 and the second housing 120 at least in part when the electronic device 10 is viewed from above. For example, the first hinge assembly 160 may correspond to the first housing 110 and the second housing 120 at least in part. For example, the first hinge assembly 160 may correspond to one end of the second housing 120 that is adjacent to the first housing 110 and one end of the first housing 110 that is adjacent to the second housing 120 at least in part.

In an example, the first hinge assembly 160 may be accommodated in the first housing 110 and the second housing 120 completely or in part. For example, the complete first hinge assembly 160 may overlap the first housing 110 and the second housing 120 when the electronic device 10 is viewed from above. For example, the complete first hinge assembly 160 may correspond to the first housing 110 and the second housing 120. For example, the complete first hinge assembly 160 may correspond to one end of the second housing 120 that is adjacent to the first housing 110 and one end of the first housing 110 that is adjacent to the second housing 120.

According to an embodiment, the second hinge assembly 170 may be accommodated in the third housing 130 and the second housing 120 at least in part. For example, the second hinge assembly 170 may overlap the third housing 130 and the second housing 120 at least in part when the electronic device 10 is viewed from above. For example, the second hinge assembly 170 may correspond to the third housing 130 and the second housing 120 at least in part. For example, the second hinge assembly 170 may correspond to one end of the second housing 120 that is adjacent to the third housing 130 and one end of the third housing 130 that is adjacent to the second housing 120 at least in part.

According to an embodiment, the first hinge assembly 160 may be disposed along a longitudinal direction of the first housing 110. For example, the first hinge assembly 160 may be disposed with the longitudinal direction of the first housing 110 as its longitudinal direction. For example, referring to FIG. 3, the first hinge assembly 160 may be disposed with the y-axis direction as its longitudinal direction.

According to an embodiment, the first hinge assembly 160 may be disposed along a longitudinal direction of the second housing 120. For example, the first hinge assembly 160 may be disposed with the longitudinal direction of the second housing 120 as its longitudinal direction. For example, referring to FIG. 3, the first hinge assembly 160 may be disposed with the y-axis direction as its longitudinal direction.

According to an embodiment, the second hinge assembly 170 may be disposed along the longitudinal direction of the second housing 120. For example, the second hinge assembly 170 may be disposed with the longitudinal direction of the second housing 120 as its longitudinal direction. For example, referring to FIG. 3, the second hinge assembly 170 may be disposed with the y-axis direction as its longitudinal direction.

According to an embodiment, the second hinge assembly 170 may be disposed along a longitudinal direction of the third housing 130. For example, the second hinge assembly 170 may be disposed with the longitudinal direction of the third housing 130 as its longitudinal direction. For example, referring to FIG. 3, the second hinge assembly 170 may be disposed with the y-axis direction as its longitudinal direction.

According to an embodiment, at least one of the first hinge assembly 160 or the second assembly 170 may be disposed along a direction that is substantially perpendicular to a longitudinal direction of the electronic device 10. For example, at least one of the first hinge assembly 160 or the second hinge assembly 170 may be disposed with the direction that is substantially perpendicular to the longitudinal direction of the electronic device 10 as its longitudinal direction. For example, referring to FIG. 3, at least one of the first hinge assembly 160 or the second hinge assembly 170 may be disposed with the y-axis direction which is substantially perpendicular to the x-axis direction as its longitudinal direction.

According to an embodiment, the width of the first hinge assembly 160 may be smaller than or equal to the width of the second hinge assembly 170. For example, the width of the first hinge assembly 160 in the longitudinal direction (for example, the x-axis direction) of the electronic device 10 may be smaller than or equal to the width of the second hinge assembly 170 in the longitudinal direction of the electronic device 10. For example, when the electronic device 10 is in the unfolded state, the width of the first hinge assembly 160 in a direction from the first housing 110 toward the second housing 120 (or a direction from the second housing 120 toward the third housing 130 or a direction from the first housing 110 toward the third housing 130) may be smaller than or equal to the width of the second hinge assembly 170 in a direction from the first housing 110 toward the second housing 120.

According to an embodiment, the first housing 110 may rotate relative to the second housing 120 with a range from 0 to 360 degrees, or in a range from 0 to +180 degrees, or in a range from 0 to -180 degrees through the first hinge assembly 160, such that the electronic device 10 may operate in an in-folding method and/or an out-folding method. According to various embodiments, the first hinge assembly 160 may be formed in the vertical direction or horizontal direction when the electronic device 10 is viewed from above. According to various embodiments, the first hinge assembly 160 may include a plurality of hinge structures. All of the plurality of hinge structures may be arranged in the same direction. For example, some of the plurality of hinge structures may be arranged in difference directions and may be folded.

According to an embodiment, the third housing 130 may rotate relative to the second housing 120 with a range of from 0 to 360 degrees, or in a range from 0 to +180 degrees, or in a range from 0 to -180 degrees through the second hinge assembly 170, such that the electronic device 10 may operate in an in-folding method and/or an out-folding method. According to various embodiments, the second hinge assembly 170 may be formed in the vertical direction or horizontal direction when the electronic device 10 is viewed from above. According to various embodiments, the second hinge assembly 170 may include a plurality of hinge structures. All of the plurality of hinge structures may be arranged in the same direction. For example, some of the plurality of hinge structures may be arranged in difference directions and may be folded.

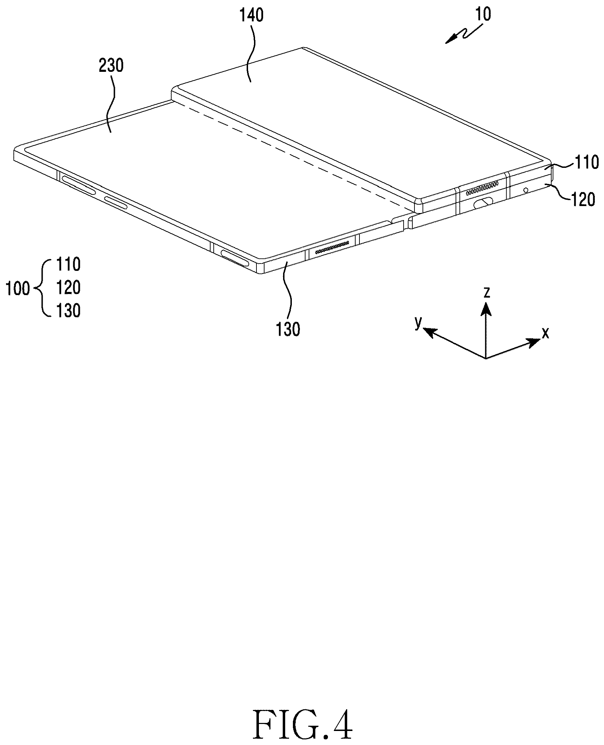

FIG. 4 is a perspective view illustrating a state in which at least a part of an electronic device is unfolded according to an embodiment.

The components of FIG. 4 may be referenced to the components of other drawings. The same terms and/or the same reference numerals are used for the same components or substantially the same components as the components of other drawings, and a redundant explanation is omitted.

Referring to FIG. 4, at least a part of the electronic device 10 may be unfolded. For example, a first housing 110 may rotate relative to a second housing 120 through a first hinge assembly (for example, the first hinge assembly 160 of FIG. 3). For example, the first housing 110 and the second housing 120 may be disposed to face each other, and the second housing 120 and a third housing 130 may be disposed to form an angle of 180 degrees with each other. For example, a first region (for example, the first region 210 of FIG. 1) of a flexible display (for example, the flexible display 200 of FIG. 1) may be disposed to face a second region (for example, the second region 220 of FIG. 1) of the flexible display.

According to an embodiment, the electronic device 10 may include a first hinge housing (not shown) and a second hinge housing (not shown). The first hinge housing (not shown) may be disposed between the first housing 110 and the second housing 120 to hide inner components (for example, the first hinge assembly 160 of FIG. 3). For example, the first hinge housing (not shown) may accommodate at least a part of the first hinge assembly (for example, the first hinge assembly 160 of FIG. 3). For example, the first hinge housing may cover at least a part of the first hinge assembly. For example, the second hinge housing 190 may accommodate at least a part of a second hinge assembly (for example, the second hinge assembly 170 of FIG. 3). For example, the second hinge housing 190 may cover at least a part of the second hinge assembly.

According to an embodiment, the first hinge housing may form the exterior of the electronic device 10 with the housing 100 according to a state of the electronic device 10. At least a part of the first hinge housing may be occluded by a part of the first housing 110 and the second housing 120, or may be exposed to the outside according to a state of the electronic device 10. For example, when the electronic device 10 is in the unfolded state (for example, the unfolded state of FIG. 1), the first hinge housing may be occluded by the first housing 110 and the second housing 120 and may not be exposed. For example, as shown in FIG. 4, when the first housing 110 is disposed to face the second housing 120, at least a part of the first hinge housing may be exposed to the outside of the electronic device 10.

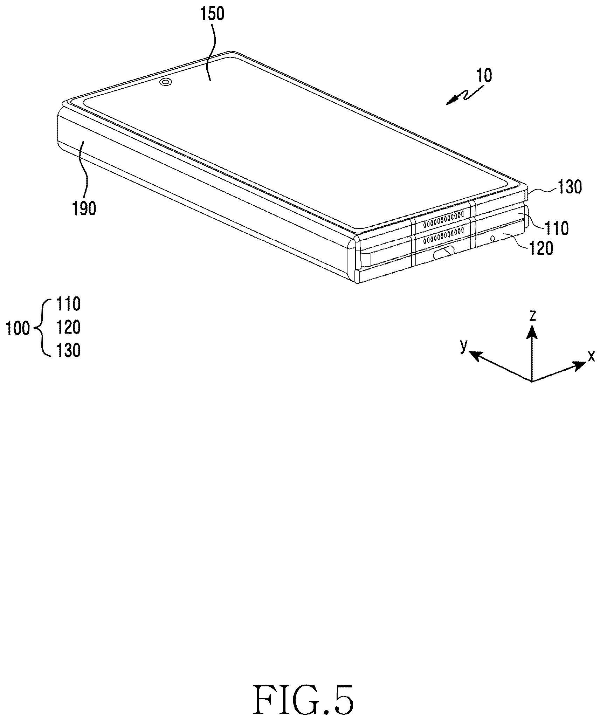

FIG. 5 is a perspective view illustrating a folded state of the electronic device according to an embodiment.

The components of FIG. 5 may be referenced to the components of other drawings. The same terms and/or the same reference numerals are used for the same components or substantially the same components as the components of other drawings, and a redundant explanation is omitted.

According to an embodiment, the second hinge housing 190 may form the exterior of the electronic device 10 with the housing 100 according to a state of the electronic device 10. For example, at least a part of the second hinge housing 190 may be occluded at least in part by a part of the third housing 130 and the second housing 120 or may be exposed to the outside according to a state of the electronic device 10. For example, as shown in FIG. 5, when the electronic device 10 is in a folded state (for example, the folded state of FIG. 1), at least a part of the second hinge housing 190 may be exposed to the outside of the electronic device. For example, when the electronic device 10 is in an unfolded state (for example, the unfolded state of FIG. 1), the second hinge housing 190 may be occluded at least in part by the third housing 130 and the second housing 120. However, this should not be considered as limiting. For example, when the electronic device 10 is in the unfolded state (for example, the unfolded state of FIG. 1), the second hinge housing 190 may be occluded by the third housing 130 and the second housing 120 and may not be exposed.

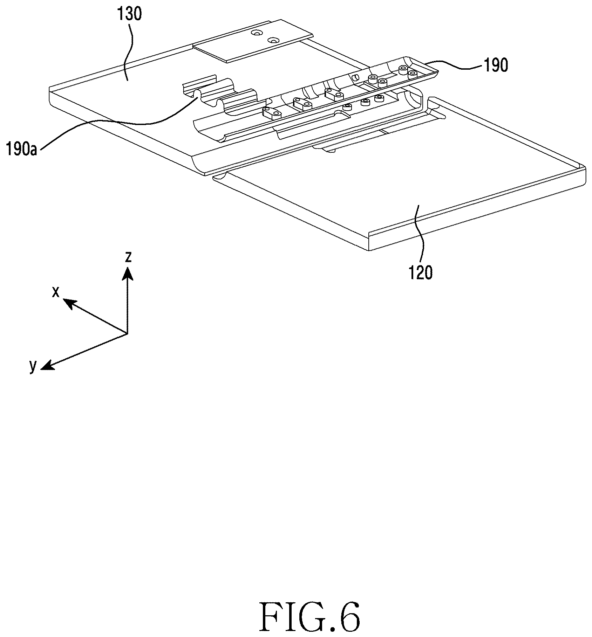

FIG. 6 is an exploded perspective view illustrating a housing and a second hinge housing according to an embodiment.

The components of FIG. 6 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 5) may include a second hinge housing 190 disposed between a second housing 120 and a third housing 130. In an example, the second hinge housing 190 may be disposed in a space which is formed by the second housing 120 and the third housing 130 at least in part. For example, the second hinge housing 190 may be accommodated in a recess which is formed by the second housing 120 and the third housing 130 at least in part.

According to an embodiment, the electronic device may include a flexible printed circuit board 190a disposed above the second hinge housing 190. The flexible printed circuit board 190a may be disposed to cross over the second hinge housing 190. For example, the flexible printed circuit board 190a may be disposed across the second housing 120, the second hinge housing 190, and the third housing 130.

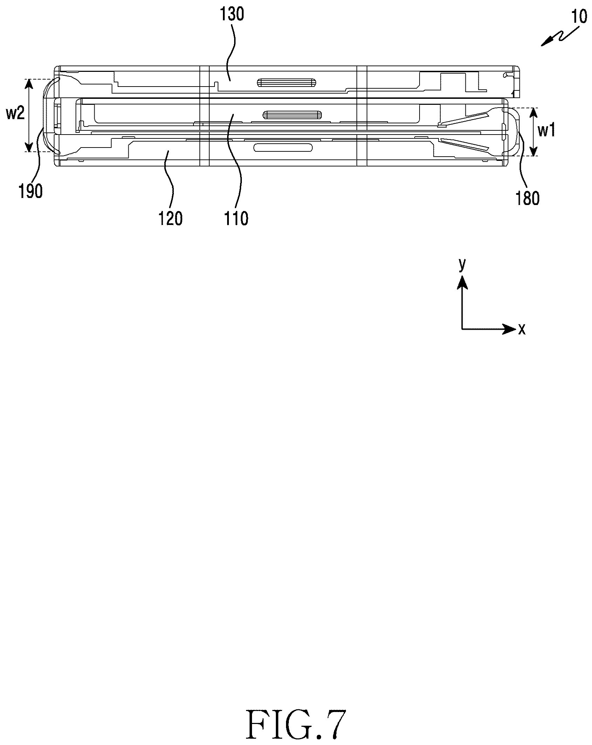

FIG. 7 is a view illustrating a folded state of the electronic device according to an embodiment.

The components of FIG. 7 may be referenced to the components of other drawings. The same terms and/or the same reference numerals are used for the same components or substantially the same components as the components of other drawings, and a redundant explanation is omitted.

According to an embodiment, the second hinge housing 190 may have a width wider than that of a first hinge housing 180. For example, referring to FIG. 7, the first hinge housing 180 may have a first width w1, and the second hinge housing 190 may have a second width w2 which is wider than the first width w1. Therein, the widths may refer to an extension of the hinge housings 180, 190 in a same direction, such as a z-direction of the electronic device as in FIG. 7.

According to an embodiment, when the electronic device is in a folded state (for example, the folded state of FIG. 1), the first hinge housing 180 may be exposed to the outside by the first width w1 between the first housing 110 and the second housing 120. For example, when the first housing 110 and the second housing 120 are folded with a certain angle, the first hinge housing 180 may be exposed to the outside in part between the first housing 110 and the second housing 120. However, when the first housing 110 and the second housing 120 are folded with a certain angle, a length of the width of a portion of the first hinge housing 180 that is exposed to the outside may be smaller than the length of the width (for example, the first width w1) that is exposed to the outside when the first housing 110 and the second housing 120 are folded to form a narrow angle (for example, between 0 and 10 degrees) with each other, for example, in a folded state. In an embodiment, the first hinge housing 180 may include a curved surface. In an embodiment, the first hinge housing 180 may include a conductive material (for example, at least one of titanium or aluminum).

According to an embodiment, when the electronic device 10 is in a folded state (for example, the folded state of FIG. 1), the second hinge housing 190 may be exposed to the outside by the second width w2 between the second housing 120 and the third housing 130. For example, when the second housing 120 and the third housing 130 are folded with a certain angle, the second hinge housing 190 may be exposed to the outside in part between the second housing 120 and the third housing 130. However, when the second housing 120 and the third housing 130 are folded with a certain angle, a length of the width of a portion of the second hinge housing 190 that is exposed to the outside may be smaller than the length of the width (for example, the second width w2) that is exposed to the outside when the second housing 120 and the third housing 130 are folded to form a narrow angle (for example, between 0 and 10 degrees) with each other, for example, in a folded state. In an embodiment, the second hinge housing 190 may include a curved surface. In an embodiment, the second hinge housing 190 may include a conductive material (for example, at least one of titanium or aluminum).

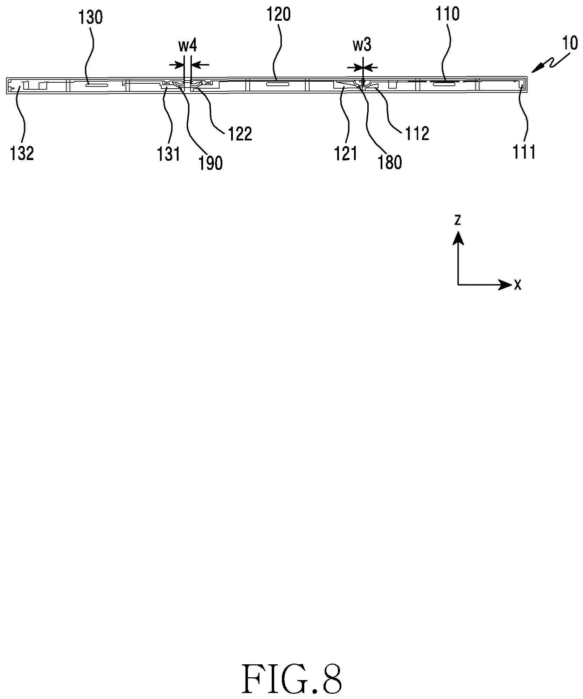

FIG. 8 is a view illustrating an unfolded state of the electronic device according to an embodiment.

The components of FIG. 8 may be referenced to the components of other drawings. The same terms and/or the same reference numerals are used for the same components or substantially the same components as the components of other drawings, and a redundant explanation is omitted.

According to an embodiment, the second housing 120 may include a first end 121 which is adjacent to the first housing 110, and a second end 122 which is adjacent to the third housing 130. The first housing 110 may include a first end 111 and a second end 112 which is closer to the second housing 120 than the first end 111. The third housing 130 may include a first end 131 which is adjacent to the second housing 120 and a second end 132 which is further spaced apart from the second housing 120 than the first end 131.

Referring to FIG. 8, when the electronic device 10 according to an embodiment is in an unfolded state (for example, the unfolded state of FIG. 1), the first hinge housing 180 may be exposed to the outside by a third width w3 between the first housing 110 and the second housing 120. However, this should not be considered as limiting. For example, when the electronic device is in the unfolded state, the first hinge housing 180 may be completely occluded by the first housing 110 and the second housing 120. For example, when the electronic device 10 is in the unfolded state, the first hinge housing 180 may be occluded by the first end 121 of the second housing 120 and the second end 112 of the first housing 110. For example, the first hinge housing 180 may not be seen from the outside due to the second end 112 of the first housing 110 and the first end 121 of the second housing 120.

According to an embodiment, when the electronic device 10 is in the unfolded state (for example, the unfolded state of FIG. 1), the first housing 110 and the second housing 120 may be disposed to cover the first hinge housing 180, and the second housing 120 and the third housing 130 may be disposed to cover at least a part of the second hinge housing 190. For example, the first housing 110 and the second housing 120 may be disposed to completely cover the first hinge housing 180, and the second housing 120 and the third housing 130 may be disposed to cover the second hinge housing 190 in part.

Referring to FIG. 8, when the electronic device 10 according to an embodiment is in the unfolded state (for example, the unfolded state of FIG. 1), the second hinge housing 190 may be exposed to the outside by a fourth width w4 between the second housing 120 and the third housing 130. For example, at least a part of the second hinge housing 190 may be occluded by the second housing 120 and the third housing 130, and the other part of the second hinge housing 190 may be exposed to the outside. For example, at least a part of the second hinge housing 190 may be occluded by the second end 122 of the second housing 120 and the first end 131 of the third housing 130. Therein, the widths may refer to an extension of the hinge housings 180, 190 in a same direction, such as a x-direction of the electronic device as in FIG. 8.

According to an embodiment, when the electronic device 10 is in the unfolded state, a width of a portion of the second housing 190 that is exposed to the outside may be larger than or equal to the width of the portion of the first hinge housing 180 that is exposed to the outside. For example, the fourth width w4 may be larger than or equal to the third width w3. In an embodiment, when the electronic device 10 is in the unfolded state, an area of the portion of the second hinge housing 190 that is exposed to the outside may be larger than or equal to an area of the portion of the first hinge housing 180 that is exposed to the outside.

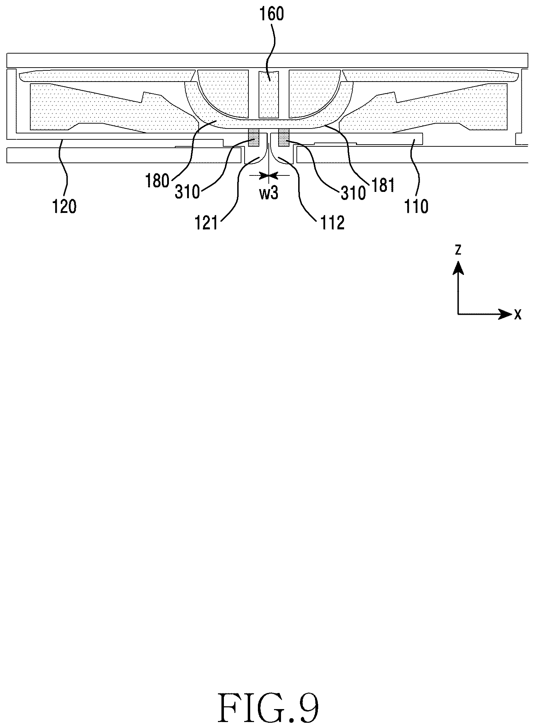

FIG. 9 is a view illustrating a part of the electronic device including the first hinge housing and a sweeper according to an embodiment.

The components of FIG. 9 may be referenced to the components of other drawings. The same terms and/or the same reference numerals are used for the same components or substantially the same components as the components of other drawings, and a redundant explanation is omitted.

According to an embodiment, the first hinge housing 180 may face the second housing 120 and the first housing 110. For example, an outer side 181 of the first hinge housing 180 may face an inner side (for example, an inner surface) of the second housing 120 in an unfolded state of the electronic device (for example, the unfolded state of FIG. 1). For example, the outer side 181 of the first hinge housing 180 may face an inner side (for example, an inner surface) of the first housing 110 in the unfolded state of the electronic device. For example, the outer side 181 of the first hinge housing 180 may face the inner side of the second housing 120 and the inner side of the first housing 110 in the unfolded state of the electronic device. However, this should not be considered as limiting. For example, the first hinge housing 180 may face the second housing 120 and the first housing 110 in at least one of the folded state or the intermediate state of the electronic device. In the disclosure, the inner side of the second housing 120 may include an inner surface of the second housing 120. In the disclosure, the inner side of the first housing 110 may include an inner surface of the first housing 110.

Referring to FIG. 9, the electronic device (for example, the electronic device 10 of FIG. 1) according to an embodiment may include a first dustproof member to prevent or reduce an inflow of foreign substances into the electronic device 10. In an embodiment, the second end 112 of the first housing 110 and the first end 121 of the second housing 120 may be spaced apart from each other. For example, the second end 112 of the first housing 110 and the first end 121 of the second housing 120 may be spaced apart from each other by a third width w3. The second end 112 of the first housing 110 and the first end 121 of the second housing 120 may be spaced apart from each other, and hence, foreign substances flowing between the second housing 120 and the first housing 110 may flow into the electronic device. For example, foreign substances may flow into the electronic device through at least one of a gap between the second housing 120 and the first hinge housing 180 or a gap between the first housing 110 and the first hinge housing 180. However, this should not be considered as limiting. For example, the second end 112 of the first housing 110 and the first end 121 of the second housing 120 may adjoin each other.

According to an embodiment, the electronic device 10 may include a sweeper 310 to prevent or reduce an inflow of foreign substances into the electronic device. For example, a plurality of first dustproof members may include the sweeper 310. However, this should not be considered as limiting. For example, at least one of the plurality of first dustproof members may include at least one of the sweeper 310, a protrusion, a brush or a sealing member.

According to an embodiment, the plurality of first dustproof members (for example, the sweeper 310) may be disposed at a position to prevent or reduce an inflow of foreign substance into at least one of a gap between the second housing 120 and the first hinge housing 180 or a gap between the first housing 110 and the first hinge housing 180. For example, the plurality of first dustproof members may be disposed in at least one of a gap between the second housing 120 and the first hinge housing 180 or a gap between the first housing 110 and the first hinge housing 180. For example, the plurality of first dustproof members may be disposed in at least one of the second housing 120 or the first housing 110. For example, the plurality of first dustproof members may be disposed on at least one of an inner side of the second housing 120 or an inner side of the first housing 110. However, this should not be considered as limiting. Although not shown in FIG. 9, the plurality of first dustproof members may be disposed in the first hinge housing 180. For example, the plurality of first dustproof members may be disposed on the outer side 181 of the first hinge housing 180.

According to an embodiment, the plurality of first dustproof members may be formed on at least one of an inner side of the second housing 120 or an inner side of the first housing 110. For example, the plurality of first dustproof members may be integrally formed with at least one of the second housing 120 or the first housing 110. However, this should not be considered as limiting. For example, the plurality of first dustproof members may be a member that is separate from at least one of the second housing 120 or the first housing 110.

According to an embodiment, the plurality of first dustproof members may have a shape to prevent or reduce an inflow of foreign substances into at least one of a gap between the second housing 120 and the first hinge housing 180 or a gap between the first housing 110 and the first hinge housing 180. For example, the plurality of first dustproof members may protrude in a direction from at least one of the second housing 120 or the first housing 110 toward the first hinge housing 180. For example, the plurality of first dustproof members may protrude in a direction from at least one of an inner side of the second housing 120 or an inner side of the first housing 110 toward the outer side 181 of the first hinge housing 180. For example, the plurality of first dustproof members may protrude in a direction from at least one of an inner side of the second housing 120 or an inner side of the first housing 110 toward the first hinge assembly 160.

According to an embodiment, the plurality of first dustproof members may adjoin the outer side 181 of the first hinge housing 180 at least in part. For example, the plurality of first dustproof members may be in contact with the outer side 181 of the first hinge housing 180. However, this should not be considered as limiting. For example, the plurality of first dustproof members may be spaced apart from the first hinge housing 180 by a certain distance. For example, the plurality of first dustproof members may be spaced apart from the outer side 181 of the first hinge housing 180 by a certain distance.

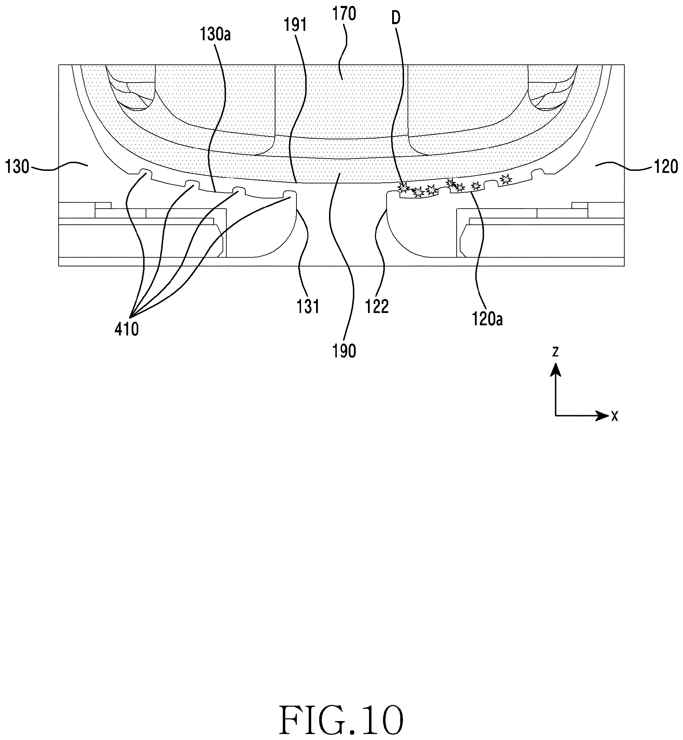

FIG. 10 is a cross-sectional view illustrating a part of the electronic device including the second hinge housing and a protrusion according to an embodiment.

The components of FIG. 10 may be referenced to the components of other drawings. The same terms and/or the same reference numerals are used for the same components or substantially the same components as the components of other drawings, and a redundant explanation is omitted.

According to an embodiment, the second hinge housing 190 may face the second housing 120 and the third housing 130. For example, the outer side 191 of the second hinge housing 190 may face an inner side 120a of the second housing 120 in an unfolded state of the electronic device (for example, the unfolded state of FIG. 1). For example, the outer side 191 of the second hinge housing 190 may face an inner side 130a (for example, an inner surface) of the third housing 130 in the unfolded state of the electronic device. For example, the outer side 191 of the second hinge housing 190 may face the inner side 120a of the second housing 120 and the inner side 130a of the third housing 130 in the unfolded state of the electronic device. However, this should not be considered as limiting. For example, the second hinge housing 190 may face the second housing 120 and the third housing 130 in at least one of the folded state or the intermediate state of the electronic device. In the disclosure, the inner side 130a of the third housing 130 may include an inner surface of the third housing 130.

Referring to FIG. 10, the electronic device (for example, the electronic device 10 of FIG. 1) according to an embodiment may include a second dustproof member to prevent or reduce an inflow of foreign substances into the electronic device 10. In an embodiment, the second end 122 of the second housing 120 and the first end 131 of the third housing 130 may be spaced apart from each other. For example, the second end 122 of the second housing 120 and the first end 131 of the third housing 130 may be spaced apart from each other, and hence, foreign substances flowing between the second housing 120 and the third housing 130 may flow into the electronic device. For example, foreign substances D may flow into the electronic device through at least one of a gap between the second housing 120 and the second hinge housing 190 or a gap between the third housing 130 and the second hinge housing 190.

According to an embodiment, the electronic device 10 may include a plurality of protrusions 410 to prevent or reduce an inflow of foreign substances D into the electronic device. For example, the plurality of second dustproof members may include the plurality of protrusions 410. For example, the second dustproof member may be different from the first dustproof member. However, this should not be considered as limiting. For example, the second dustproof member may be the same as the first dustproof member.

According to an embodiment, the plurality of protrusions 410 may be disposed at positions to prevent or reduce an inflow of foreign substances D into at least one of a gap between the second housing 120 and the second hinge housing 190 or a gap between the third housing 130 and the second hinge housing 190. For example, the plurality of protrusions 410 may be disposed in at least one of a gap between the second housing 120 and the second hinge housing 190 or a gap between the third housing 130 and the second hinge housing 190. For example, the plurality of protrusions 410 may be disposed in at least one of the second housing 120 or the third housing 130. For example, the plurality of protrusions 410 may be disposed on at least one of the inner side 120a of the second housing 120 or the inner side 130a of the third housing 130. However, this should not be considered as limiting. Although not shown in FIG. 10, the plurality of protrusions 410 may be disposed in the second hinge housing 190. For example, the plurality of protrusions 410 may be disposed on the outer side 191 of the second hinge housing 190.

According to an embodiment, the plurality of protrusions 410 may be formed on at least one of the inner side 120a of the second housing 120 or the inner side 130a of the third housing 130. For example, the plurality of protrusions 410 may be integrally formed with at least one of the second housing 120 or the third housing 130. However, this should not be considered as limiting. For example, the plurality of protrusions 410 may be a member that is separate from at least one of the second housing 120 or the third housing 130.

According to an embodiment, the plurality of protrusions 410 may have a shape to prevent or reduce an inflow of foreign substances D into at least one of a gap between the second housing 120 and the second hinge housing 190 or a gap between the third housing 130 and the second hinge housing 190. For example, the plurality of protrusions 410 may protrude in a direction from at least one of the second housing 120 or the third housing 130 toward the second hinge housing 190. For example, the plurality of protrusions 410 may protrude in a direction from at least one of the inner side 120a of the second housing 120 or the inner side 130a of the third housing 130 toward the outer side 191 of the second hinge housing 190. For example, the plurality of protrusions 410 may protrude in a direction from at least one of the inner side 120a of the second housing 120 or the inner side 130a of the third housing 130 toward the second hinge assembly 170.

According to an embodiment, the plurality of protrusions 410 may be spaced apart from the second hinge housing 190 by a certain distance. For example, the plurality of protrusions 410 may be spaced apart from the outer side 191 of the second hinge housing 190 by a certain distance. However, this should not be considered as limiting. For example, the plurality of protrusions 410 may adjoin the outer side 191 of the second hinge housing 190 at least in part. For example, the plurality of protrusions 410 may adjoin the outer side 191 of the second hinge housing 190 at least in part and at least in one of a folding state, an unfolding state, or an intermediate state of the electronic device 10.

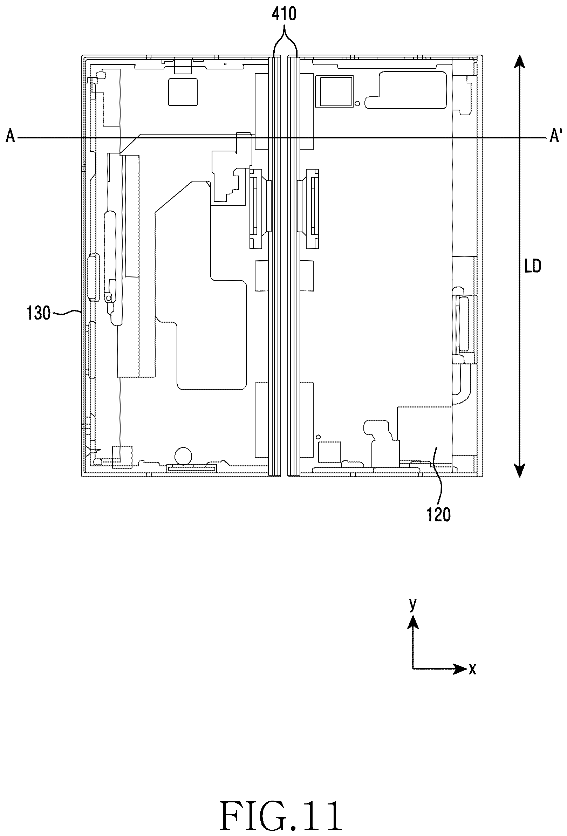

FIG. 11 is a top view of the second housing and the third housing including the protrusion according to an embodiment.

The components of FIG. 11 may be referenced to the components of other drawings. The same terms and/or the same reference numerals are used for the same components or substantially the same components as the components of other drawings, and a redundant explanation is omitted.

Referring to FIG. 11, the plurality of protrusions 410 according to an embodiment may be disposed to be substantially parallel to a longitudinal direction LD of the second housing 120. For example, the plurality of protrusions 410 may be disposed to be substantially parallel to a longitudinal direction of the third housing 130. For example, the plurality of protrusions 410 may be disposed to be substantially parallel to a longitudinal direction of the second hinge housing (for example, the second hinge housing 190 of FIG. 10). For example, referring to FIG. 11, the plurality of protrusions 410 may be disposed with the y-axis direction as its longitudinal direction.

According to an embodiment, the plurality of protrusions 410 may be formed to be substantially parallel to the longitudinal direction LD of the second housing 120. The plurality of protrusions 410 may be formed to be substantially parallel to the longitudinal direction of the third housing 130. For example, the plurality of protrusions 410 may be formed to be substantially parallel to the longitudinal direction of the second hinge housing (for example, the second hinge housing 190 of FIG. 10).

According to an embodiment, at least one of the plurality of protrusions 410 may be formed in parallel with a rotation axis (for example, the y-axis direction) of the second hinge assembly (the second hinge assembly 170 of FIG. 3). According to an embodiment, at least one of the plurality of protrusions 410 may protrude in a direction perpendicular to one surface of the second hinge housing (the second hinge housing 190 of FIG. 10).

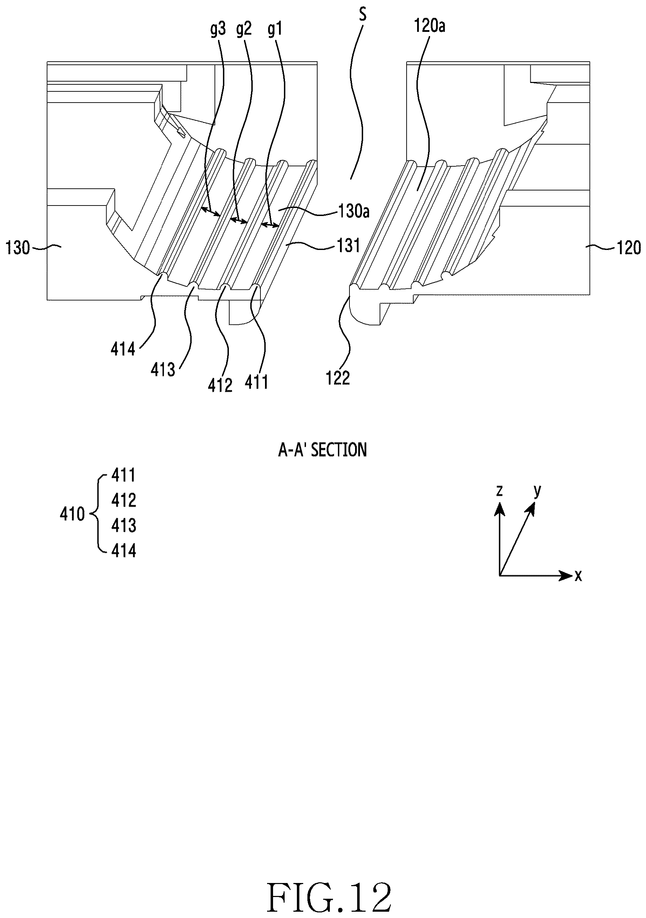

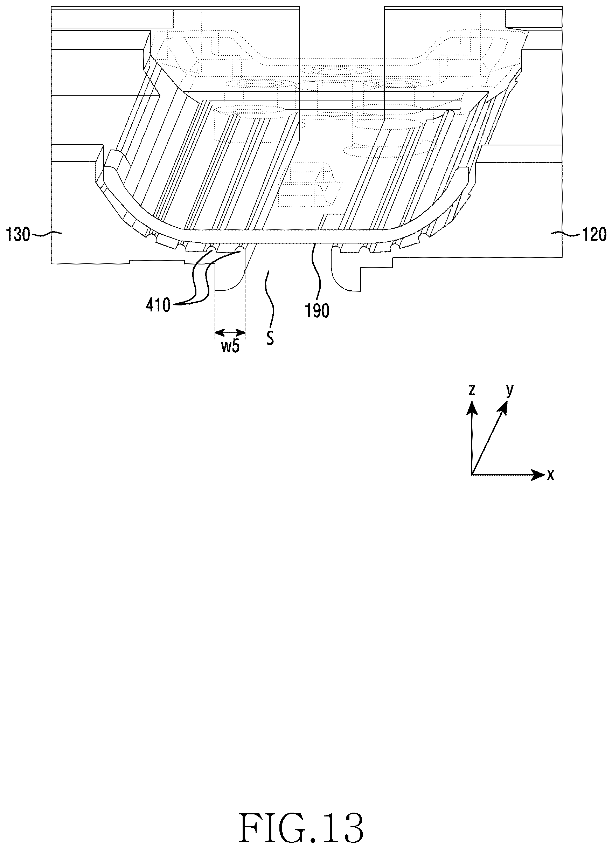

FIG. 12 is a perspective view of the second housing and the third housing including the protrusion according to an embodiment. FIG. 13 is a view illustrating the second hinge housing of the embodiment of FIG. 12 being disposed at least in part between the second housing and the third housing.

The components of FIGS. 12 and 13 may be referenced to the components of other drawings. The same terms and/or the same reference numerals are used for the same components or substantially the same components as the components of other drawings, and a redundant explanation is omitted.

FIG. 12 is a cross-sectional view taken on line A-A' of FIG. 11, showing the second housing 120 and the third housing 130.

Referring to FIG. 12, the plurality of protrusions 410 according to an embodiment may include a first protrusion 411, a second protrusion 412, and a third protrusion 413. However, this should not be considered as limiting. For example, the plurality of protrusions 410 may omit one of the above-described protrusions or may further include at least one protrusion. For example, the plurality of protrusions 410 may further include a fourth protrusion 414.

According to an embodiment, the first protrusion 411, the second protrusion 412, and the third protrusion 413 may be arranged in sequence in a direction from the first end 131 of the third housing 130 toward the second end (for example, the second end 132 of FIG. 8) of the third housing. For example, the first protrusion 411 may be disposed adjacent to the first end 131 of the third housing 130. The second protrusion 412 may be disposed between the first protrusion 411 and the third protrusion 413. The third protrusion 413 may be disposed closer to the second end of the third housing 130 than the first protrusion 411 and the second protrusion 412. However, this should not be considered as limiting. For example, the first protrusion 411, the second protrusion 412, the third protrusion 413 and the fourth protrusion 414 may be arranged in sequence in a direction from the first end 131 of the third housing 130 toward the second end of the third housing.

According to an embodiment, the first protrusion 411 may have a first height in a direction from the inner side 130a of the third housing 130 toward the second hinge housing (for example, the second hinge housing 190 of FIG. 1) (for example, the +z direction). The second protrusion 412 may have a second height in a direction from the inner side 130a of the third housing 130 toward the second hinge housing. The third protrusion 413 may have a third height in a direction from the inner side 130a of the third housing 130 toward the second hinge housing. For example, the first height may be higher than or equal to the second height and the third height.

For example, the heights of the plurality of protrusions 410 may gradually increase or decrease in a direction from the first end 131 of the third housing 130 toward the second end of the third housing (for example, the second end 132 of FIG. 8). For example, the first height of the first protrusion 411 may be higher than or equal to the second height of the second protrusion 412. For example, the second height of the second protrusion 412 may be higher than or equal to the third height of the third protrusion 413.

According to an embodiment, the fourth protrusion 414 may have a fourth height in a direction from the inner side 130a of the third housing 130 toward the second hinge housing (for example, the second hinge housing 190 of FIG. 10) (for example, the +z direction). In an example, the fourth height of the fourth protrusion 414 may be higher than at least one of the second height of the second protrusion 412 or the third height of the third protrusion 413. However, this should not be considered as limiting. For example, the fourth height of the fourth protrusion 414 may be lower than the first height, the second height, and the third height.

According to an embodiment, gaps between the plurality of protrusions 410 may be the same as one another. For example, when the gaps between the plurality of protrusions 410 are the same as one another, the heights of the plurality of protrusions 410 in the direction from the inner side 130a of the third housing 130 toward the second hinge housing (for example, the second hinge housing 190 of FIG. 10) (for example, the +z direction) may be the same as one another. However, this should not be considered as limiting. For example, the gaps between the plurality of protrusions 410 may become gradually smaller in the direction from the first end 131 of the third housing 130 toward the second end (for example, the second end 132 of FIG. 8) of the third housing. For example, a first gap g1 between the first protrusion 411 and the second protrusion 412 may be larger than or equal to a second gap g2 between the second protrusion 412 and the third protrusion 413. For example, the second gap g2 between the second protrusion 412 and the third protrusion 413 may be larger than or equal to a third gap g3 between the third protrusion 413 and the fourth protrusion 414. When the gaps between the plurality of protrusions 410 become gradually smaller in the direction from the first end 131 of the third housing 130 toward the second end (for example, the second end 132 of FIG. 8) of the third housing 130, foreign substances entering between the plurality of protrusions 410 may be prevented from moving to the inside of the electronic device, or such movement may be reduced.

According to an embodiment, with respect to the plurality of protrusions 410 disposed in the second housing 120, reference may be made to the descriptions of the plurality of protrusions 410 disposed in the third housing 130. For example, the heights of the plurality of protrusions 410 disposed in the second housing 120 may become gradually higher in a direction from the second end 122 of the second housing 120 toward the first end (for example, the first end 121 of FIG. 8) of the second housing. For example, the gaps between the plurality of protrusions 410 disposed in the second housing 120 may become gradually smaller in the direction from the second end 122 of the second housing 120 toward the first end (for example, the first end 121 of FIG. 8) of the second housing 120. For example, the plurality of protrusions 410 disposed in the second housing 120 may have a shape and/or a position which is symmetric to the plurality of protrusions 410 disposed in the third housing 130 with reference to a space S between the second housing 120 and the third housing 130 (or for example with reference to a rotation axis (for example, the y-axis direction) of the second hinge assembly). However, this should not be considered as limiting.

Referring to FIGS. 9 and 13, a width of a housing (for example, the third housing 130) when the electronic device according to an embodiment includes the plurality of protrusions 410 may be smaller than a width w5 of a housing (for example, the third housing 130) when the electronic device includes a sweeper (for example, the sweeper 310 of FIG. 9). For example, referring to FIG. 9, when the electronic device according to an embodiment includes the sweeper, the bezel of the housing may be thick to guarantee a space for placing the sweeper. Accordingly, when the electronic device includes the plurality of protrusions 410, the electronic device may provide a wider display (for example, the sub display 240 of FIG. 2), and aesthetics of the electronic device may be enhanced.

According to an embodiment, at least two of the plurality of protrusions 410 may have materials different from each other. For example, at least two of the first protrusion 411, the second protrusion 412, the third protrusion 413, and the fourth protrusion 414 may have material different from each other.

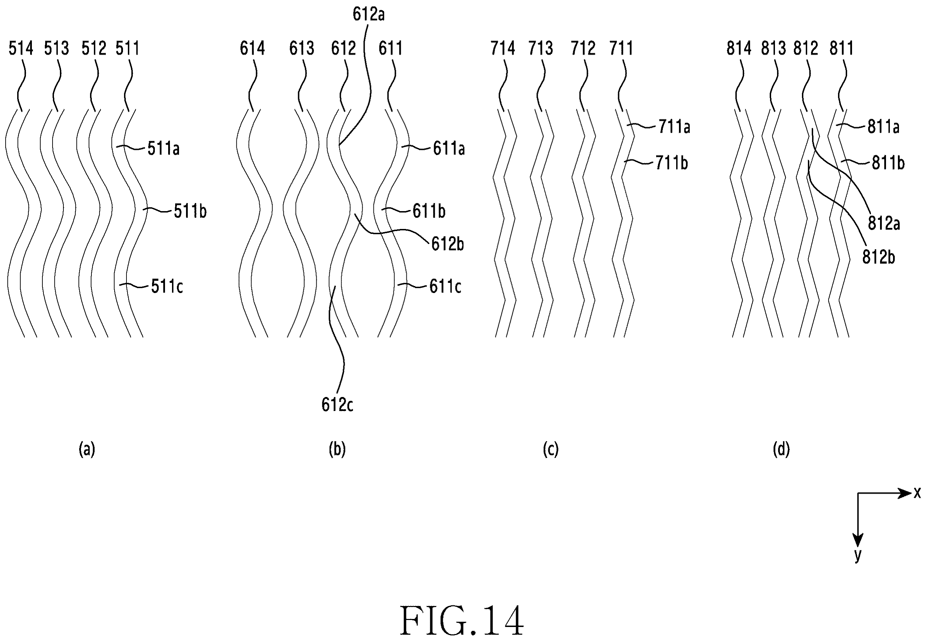

FIG. 14 is a view to explain shapes of protrusions according to various embodiments.

The components of FIG. 14 may be referenced to the components of other drawings. The same terms and/or the same reference numerals are used for the same components or substantially the same components as the components of other drawings, and a redundant explanation is omitted.

Referring to FIG. 14, the plurality of protrusions may have various shapes. For example, referring to view (a) of FIG. 14 and view (c) of FIG. 14, the plurality of protrusions may have shapes which are substantially the same as one another. However, this should not be considered as limiting. For example, referring to view (b) of FIG. 14 and view (d) of FIG. 14, the plurality of protrusions may have shapes which are symmetrical to each other.

According to an embodiment, referring to view (a) of FIG. 14, the plurality of protrusions may include a first protrusion 511, a second protrusion 512, and a third protrusion 513. However, this should not be considered as limiting. For example, the plurality of protrusions may omit at least one of the above-described protrusions or may further include at least one other protrusion. For example, the plurality of protrusions may further include a fourth protrusion 514. For example, the first protrusion 511, the second protrusion 512, the third protrusion 513, and the fourth protrusion 514 may have substantially the same shape.

According to an embodiment, the first protrusion 511 may include a first bending portion 511a and a third bending portion 511c which are bent in a direction facing the second protrusion 512 (for example, the -x direction). The first protrusion 511 may include a second bending portion 512a which is disposed between the first bending portion 511a and the third bending portion 511c, and is bent in the opposite direction (for example, the +x direction) of the direction facing the second protrusion 512. However, this should not be considered as limiting.

According to an embodiment, referring to view (b) of FIG. 14, the plurality of protrusions may include a first protrusion 611, a second protrusion 612, and a third protrusion 613. However, this should not be considered as limiting. For example, the plurality of protrusions may omit at least one of the above-described protrusions or may further include at least one other protrusion. For example, the plurality of protrusions may further include a fourth protrusion 614. For example, the first protrusion 611 and the third protrusion 613 may have substantially the same shape. For example, the second protrusion 612 and the fourth protrusion 614 may have substantially the same shape. For example, the first protrusion 611 and the second protrusion 612 may have shapes symmetrical to each other. For example, the second protrusion 612 and the third protrusion 613 may have shapes symmetrical to each other.

According to an embodiment, the first protrusion 611 may include a first bending portion 611a and a third bending portion 611c which are bent in the opposite direction (for example, the +x direction) of the direction facing the second protrusion 612. The first protrusion 611 may include a second bending portion 611b which is disposed between the first bending portion 611a and the third bending portion 611c, and is bent in the direction (for example, the -x direction) facing the second protrusion 612. The second protrusion 612 may include a fourth bending portion 612a and a sixth bending portion 612c which are bent in the direction (for example, the -x direction) facing the third protrusion 613. The second protrusion 612 may include a fifth bending portion 612b which is disposed between the fourth bending portion 612a and the sixth bending portion 612c, and is bent in the direction (for example, the +x direction) facing the first protrusion 611.

According to an embodiment, referring to view (c) of FIG. 14, the plurality of protrusions may include a first protrusion 711, a second protrusion 712, and a third protrusion 713. However, this should not be considered as limiting. For example, the plurality of protrusions may omit at least one of the above-described protrusions or may further include at least one other protrusion. For example, the plurality of protrusions may further include a fourth protrusion 714. For example, the first protrusion 711, the second protrusion 712, the third protrusion 713, and the fourth protrusion 714 may have substantially the same shape.

According to an embodiment, the first protrusion 711 may include a first portion 711a and a second portion 711b which forms a certain angle with the first portion 711a. For example, the first portion 711a and the second portion 711b may be disposed to form an obtuse angle therebetween. However, this should not be considered as limiting. For example, the first portion 711a and the second portion 711b may be disposed to form at least one of an acute angle or a right angle therebetween.

According to an embodiment, referring to view (d) of FIG. 14, the plurality of protrusions may include a first protrusion 811, a second protrusion 812, and a third protrusion 813. However, this should not be considered as limiting. For example, the plurality of protrusions may omit at least one of the above-described protrusions or may further include at least one other protrusion. For example, the plurality of protrusions may further include a fourth protrusion 814. For example, the first protrusion 811 and the third protrusion 813 may have substantially the same shape. For example, the second protrusion 812 and the fourth protrusion 814 may have substantially the same shape. For example, the first protrusion 811 and the second protrusion 812 may have shapes symmetrical to each other. For example, the second protrusion 812 and the third protrusion 813 may have shapes symmetrical to each other.

According to an embodiment, the first protrusion 811 may include a first portion 811a and a second portion 811b which forms a certain angle with the first portion 811a. The second protrusion 812 may include a third portion 812a and a fourth portion 812b which forms a certain angle with the third portion 812a. For example, the first portion 811a and the second portion 811b may be disposed to form an obtuse angle therebetween, and the first portion 811a and the third portion 812a may be disposed to form an acute angle therebetween. However, this should not be considered as limiting. For example, the first portion 811a and the second portion 811b may be disposed to form an acute angle therebetween, and the first portion 811a and the third portion 812b may be disposed to form an obtuse angle therebetween. For example, the first portion 811a and the second portion 811b may be disposed to form a right angle therebetween, and the first portion 811a and the third portion 812b may be disposed to form a right angle therebetween.

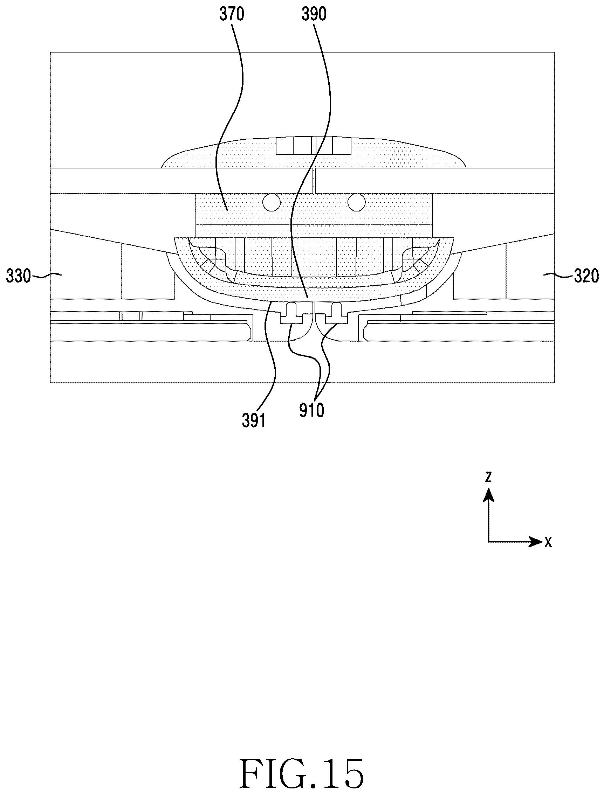

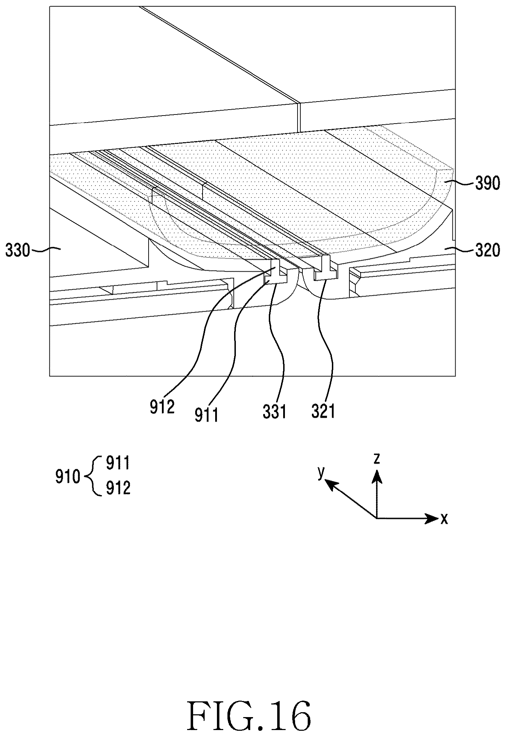

FIG. 15 is a cross-sectional view illustrating a part of the electronic device including a second hinge housing and a sealing member according to an embodiment. FIG. 16 is a perspective view illustrating a part of the electronic device including the second hinge housing and the sealing member.

The components of FIGS. 15 and 16 may be referenced to the components of other drawings. The same terms and/or the same reference numerals are used for the same components or substantially the same components as the components of other drawings, and a redundant explanation is omitted.

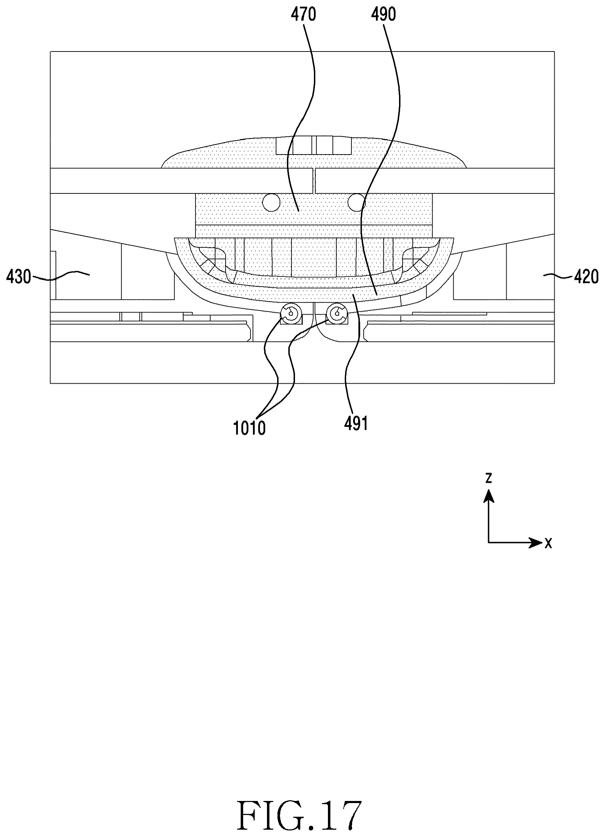

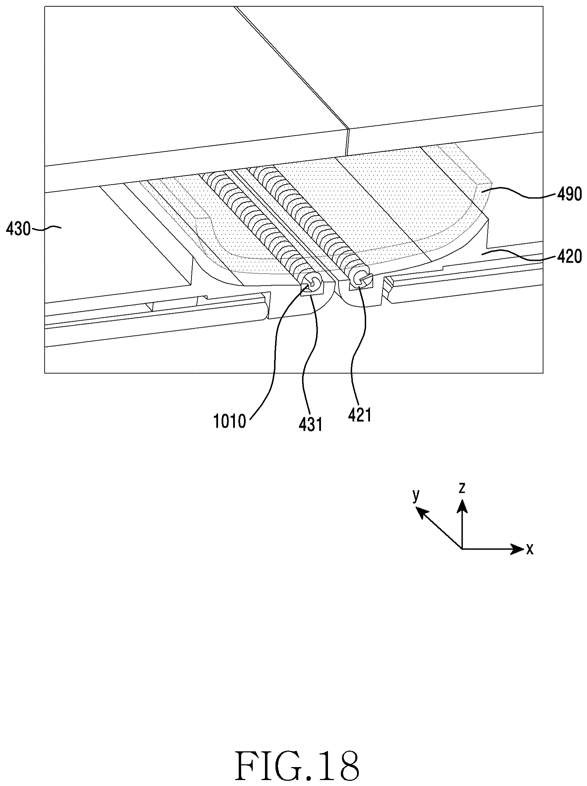

According to an embodiment, at least one of the plurality of second dustproof members may include at least one of a protrusion, a sweeper, a brush and a sealing member 910. For example, at least one of a plurality of protrusions (for example, the plurality of protrusions 410 of FIG. 10) may include at least one of the sweeper, the brush, or the sealing member 910. Hereinafter, at least one of the plurality of protrusions including the sealing member 910 will be described with reference to FIGS. 15 and 16, and at least one of the plurality of protrusions including a brush 1010 will be described with reference to FIGS. 17 and 18.

Referring to FIG. 15, at least one of the plurality of protrusions according to an embodiment may include the sealing member 910. In other words, the electronic device may comprise a plurality of protrusions, wherein at least one of the protrusions is formed as the sealing member 910. The sealing member 910 may be disposed in at least one of a second housing 320 or a third housing 330. However, this should not be considered as limiting. For example, the sealing member 910 may be disposed in a second hinge housing 390.

According to an embodiment, the sealing member 910 may be coupled with at least one of the second housing 320 or the third housing 330. For example, the sealing member 910 may be bonded to at least one of the second housing 320 or the third housing 330. For example, the sealing member 910 may be bonded to at least one of the second housing 320 or the third housing 330 by using an adhesive member. For example, the adhesive member may include at least one of an adhesive tape, glue, or a silicon.

According to an embodiment, the sealing member 910 may protrude in a direction facing the second hinge housing 390. For example, the sealing member 910 may protrude in a direction from at least one of an inner side of the second housing 320 or an inner side of the third housing 330 toward an outer side of the second hinge housing 390. For example, the sealing member 910 may protrude in a direction facing a second hinge assembly 370.

According to an embodiment, the sealing member 910 may face the second hinge housing 390. For example, the sealing member 910 may adjoin the second hinge housing 390. For example, the sealing member 910 may be in contact with the second hinge housing 390. The sealing member 910 may be in contact with the second hinge housing 390, so that the sealing member 910 may prevent or reduce an inflow of foreign substances into the electronic device from the outside of the electronic device.

According to an embodiment, the sealing member 910 may include a polymer material such as rubber or silicon. For example, the sealing member 910 may include polyurethane (PU). However, this should not be considered as limiting. For example, the sealing member 910 may include an elastic body of various materials which is bendable. In an embodiment, the sealing member 910 may include a polymer material such as polyethylene terephthalate (PET), polyurethane (PU), or thermoplastic polyurethane (TPU).

According to an embodiment, the sealing member 910 may be formed of a soft material, so that the sealing member may move smoothly relative to the second hinge housing 390 when the state of the electronic device is changed. Accordingly, the sealing member 910 may prevent or reduce an operation defect caused by overlapping between the sealing member 910 and the second hinge housing 390.

Referring to FIG. 16, the sealing member 910 according to an embodiment may be disposed in at least one of a first recess 321 or a second recess 331. The first recess 321 may be formed in the second housing 320. The second recess 331 may be formed in the third housing 330. For example, a part of the sealing member 910 may be disposed inside at least one of the first recess 321 or the second recess 331. The other part of the sealing member 910 may be disposed outside at least one of the first recess 321 or the second recess 331. For example, the sealing member 910 may protrude from at least one of the first recess 321 or the second recess 331. The first recess 321 or the second recess 331 may be a recess formed between two of a plurality of protrusions (for example a recess with a width g1, g2, or g3 as shown on FIG. 12) of the second housing 320 or the third housing 330. However, this should not be considered as limiting, for example first recess 321 and the second recess 331 may be a recess formed between two of a plurality of protrusions of the second housing 320 or the third housing 330.

According to an embodiment, the sealing member 910 may include a first portion 911 which faces at least one of the second housing 320 or the third housing 330, and a second portion 912 which is disposed closer to the second hinge housing 390 than the first portion 911. For example, the first portion 911 of the sealing member 910 may be disposed inside at least one of the first recess 321 or the second recess 331. For example, the second portion 912 of the sealing member 910 may adjoin the second hinge housing 390. For example, the second portion 912 of the sealing member 910 may be in contact with the outer side of the second hinge housing 390. According to an embodiment, a width of the first portion 911 may be larger than or equal to a width of the second portion 912. However, this should not be considered as limiting.

FIG. 17 is a cross-sectional view illustrating a part of the electronic device including a second hinge housing and a brush. FIG. 18 is a perspective view illustrating a part of the electronic device including the second hinge housing and the brush.

The components of FIGS. 17 and 18 may be referenced to the components of other drawings. The same terms and/or the same reference numerals are used for the same components or substantially the same components as the components of other drawings, and a redundant explanation is omitted.

Referring to FIGS. 17 and 18, at least one of a plurality of protrusions according to an embodiment may include a brush 1010. The brush 1010 may be disposed in at least one of a second housing 420 or a third housing 430. However, this should not be considered as limiting. For example, the brush 1010 may be disposed in a second hinge housing 490. Also, the brush 1010 may be disposed in a recess formed between two of a plurality of protrusions (for example a recess with a width g1, g2, or g3 as shown on FIG. 12) of the second housing 420 or the third housing 430. However, this should not be considered as limiting. For example, the brush 1010 may be disposed in a recess formed between two of a plurality of protrusions (for example a recess with a width g1, g2, or g3 as shown on FIG. 12) of the second housing 420 and the third housing 430.

According to an embodiment, the brush 1010 may be coupled with at least one of the second housing 420 or the third housing 430. For example, the brush 1010 may be coupled with at least one of the second housing 420 or the third housing 430 to rotate relative to at least one of the second housing 420 or the third housing 430. For example, the brush 1010 may include an interdental brush or eyelashes.

According to an embodiment, the brush 1010 may be disposed to rotate in at least one of a gap between the second hinge housing 490 and the second housing 420 or a gap between the second hinge housing 490 and the third housing 430.

According to an embodiment, the brush 1010 may protrude in a direction facing the second hinge housing 490. For example, the brush 1010 may protrude in a direction from at least one of an inner side of the second housing 420 or an inner side of the third housing 430 toward an outer side of the second hinge housing 490. For example, the brush 1010 may protrude in a direction facing a second hinge assembly 470.

According to an embodiment, the brush 1010 may face the second hinge housing 490. For example, the brush 1010 may adjoin the second hinge housing 490. For example, the brush 1010 may be in contact with the second hinge housing 490. For example, the brush 1010 may be disposed to rotate relative to the second hinge housing 490 while being in contact with the second hinge housing 490. The brush 1010 may rotate in contact with the second hinge housing 490, so that the brush 1010 may prevent or reduce an inflow foreign substances into the electronic device from the outside of the electronic device.

According to an embodiment, the brush 1010 may be made of a soft material, such that the brush may smoothly move relative to the second hinge housing 490 when the state of the electronic device is changed. Accordingly, the brush 1010 may prevent or reduce an operation defect caused by overlapping between the brush 1010 and the second hinge housing 490.

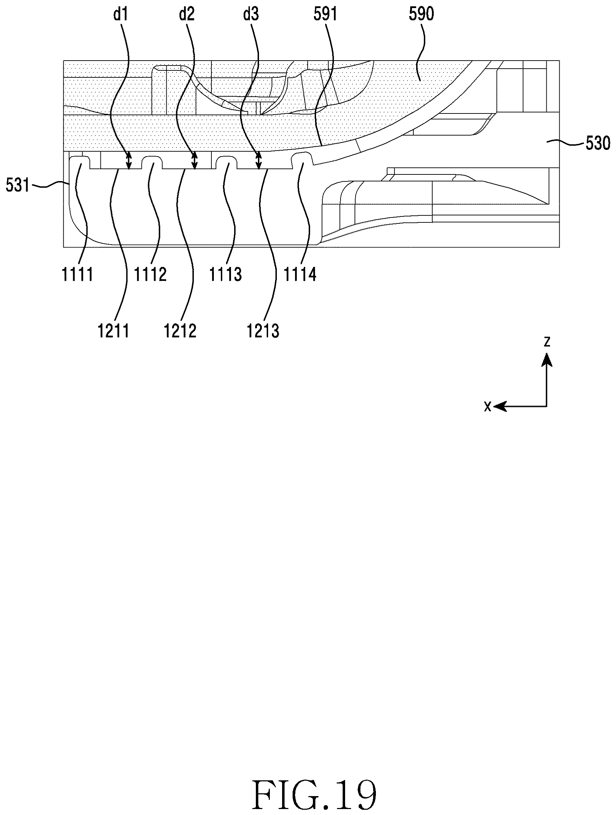

FIG. 19 is a view to explain a relationship between a plurality of protrusions and a second hinge housing in an unfolded state of an electronic device according to an embodiment.

The components of FIG. 19 may be referenced to the components of other drawings. The same terms and/or the same reference numerals are used for the same components or substantially the same components as the components of other drawings, and a redundant explanation is omitted.

Referring to FIG. 19, a plurality of protrusions may include a first protrusion 1111, a second protrusion 1112, and a third protrusion 1113. However, this should not be considered as limiting. For example, the plurality of protrusions may omit at least one of the above-described protrusions, or may further include at least one other protrusion. For example, the plurality of protrusions may further include a fourth protrusion 1114.

According to an embodiment, the electronic device may include a plurality of grooves (for example, a first groove 1211) formed between the plurality of protrusions. The plurality of grooves may be formed by the plurality of protrusions. The plurality of grooves may be formed in at least one of a second housing or a third housing 530. Although FIG. 19 illustrates only the third housing 530, the descriptions of the third housing 530 are referenced to the second housing.

According to an embodiment, the electronic device may include a first groove 1211 formed between the first protrusion 1111 and the second protrusion 1112, and a second groove 1212 formed between the second protrusion 1112 and the third protrusion 1113. However, this should not be considered as limiting. For example, the electronic device may omit at least one of the above-described grooves or may further include at least one groove. For example, the electronic device may further include a third groove 1213 formed between the third protrusion 1113 and the fourth protrusion 1114.

According to an embodiment, the first groove 1211 may have a first depth d1 in the opposite direction (for example, the -z direction) of a direction in which the plurality of protrusions protrude (for example, the +z direction). The second groove 1212 may have a second depth d2 in the opposite direction of the direction in which the plurality of protrusions protrude. For example, the first depth d1 may be larger than or equal to the second depth d2. However, this should not be considered as limiting.

According to an embodiment, the depths of the plurality of grooves may become gradually smaller in a direction from a first end 531 of the third housing 530 toward a second end (for example, the second end 132 of FIG. 8) of the third housing 530. For example, the first depth d1 of the first groove 1211 may be larger than or equal to the second depth d2 of the second groove 1212. For example, the second depth d2 of the second groove 1212 may be larger than or equal to a third depth d3 of the third groove 1213. However, this should not be considered as limiting. For example, the third depth d3 of the third groove 1213 may be larger than the first depth d1 of the first groove 1211 and the second depth d2 of the second groove 1212.

According to an embodiment, the depths of the plurality of grooves (for example, the first groove 1211) may vary according to a thickness of the housing (for example, the third housing 530) in which the plurality of grooves are formed. For example, as the thickness of the housing in which the grooves are formed increases, the depths of the grooves may increase. For example, a depth of a groove formed in a first portion of the third housing 530 may be larger than a depth of a groove formed in a second portion of the third housing 530 which is thinner than the first portion.

According to an embodiment, the first protrusion 1111 may be disposed at the first end 531 of the third housing 530. For example, a periphery 531 of the third housing 530 may include the first protrusion 1111. For example, the periphery 531 of the third housing 530 may include a side of the first protrusion 1111.

According to an embodiment, a protrusion that has a minimum spacing from the second hinge housing 590 among the plurality of protrusions may vary according to a state of the electronic device 10. For example, when the electronic device (for example, the electronic device 10 of FIG. 1) is in an unfolded state (for example, the unfolded state of FIG. 1), the first protrusion 1111 among the plurality of protrusions may have a minimum spacing from the second hinge housing 590. For example, the first protrusion 1111 among the plurality of protrusions may have a minimum spacing from the second hinge housing 590 in a direction (for example, the +z direction) from the third housing 530 toward the second hinge housing 590.

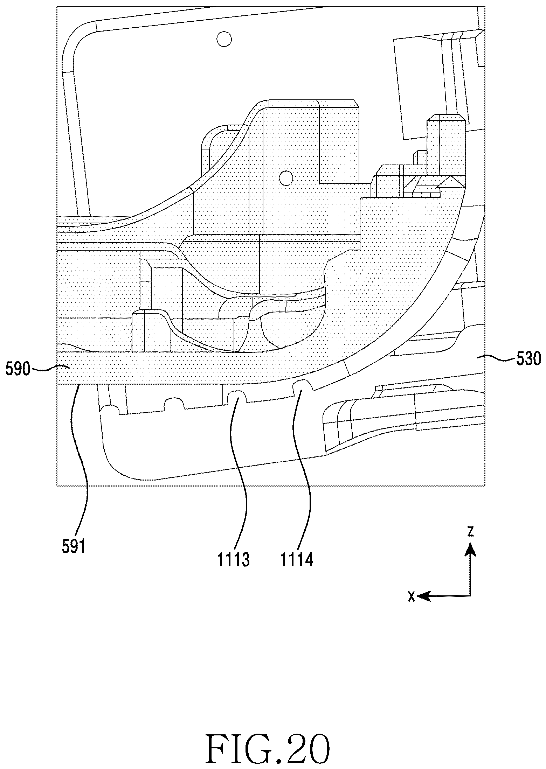

Hereinafter, the protrusion that has a minimum spacing from the second hinge housing 590 among the plurality of protrusions, which varies according to a change in the state of the electronic device, will be described with reference to FIGS. 20, 21, 22, and 23.

FIGS. 20, 21, 22 and 23 are views to explain a relationship between the plurality of protrusions and the second hinge housing according to a state of the electronic device according to an embodiment.

According to an embodiment, the protrusion that has a minimum spacing from the second hinge housing 590 among the plurality of protrusions may vary according to a first angle of the third housing 530 inclined relative to the second hinge housing 590. For example, the protrusion that has a minimum spacing from the second hinge housing 590 among the plurality of protrusions may vary according to a first angle of a hinge structure of a second hinge assembly (for example, the second hinge assembly 170 of FIG. 3). For example, the protrusion that has a minimum spacing from the second hinge housing 530 among the plurality of protrusions may vary according to the first angle of the third housing 530 inclined with reference to the unfolded state of the electronic device. For example, the protrusion that has a minimum spacing from the second hinge housing 590 among the plurality of protrusions may vary according to the first angle of the third housing 530 inclined relative to an outer side 591 of the second hinge housing 590. According to an embodiment, positions of the plurality of protrusions may be determined considering the first angle.

According to an embodiment, when the first angle is greater than or equal to about 0 degree and is less than about 6 degrees, the fourth protrusion 1114 among the plurality of protrusions may have a minimum spacing from the second hinge housing 590. In an example, when the first angle is greater than or equal to about 0 degree and is less than about 6 degrees, the fourth protrusion 1114 may be disposed at a position having a minimum spacing from the second hinge housing 590.

Referring to FIG. 20, according to an embodiment, when the first angle is about 6 degrees, the third protrusion 1113 and the fourth protrusion 1114 among the plurality of protrusions may have a minimum spacing from the second hinge housing 590. In an example, when the first angle is about 6 degrees, the third protrusion 1113 and the fourth protrusion 1114 may be disposed at a position having a minimum spacing from the second hinge housing 590.

According to an embodiment, when the first angle is greater than about 6 degrees and is less than or equal to about 40 degrees, the third protrusion 1113 among the plurality of protrusions may have a minimum spacing from the second hinge housing 590. In an example, when the first angle is greater than about 6 degrees and is less than or equal to about 40 degrees, the third protrusion 1113 may be disposed at a position having a minimum spacing from the second hinge housing 590.

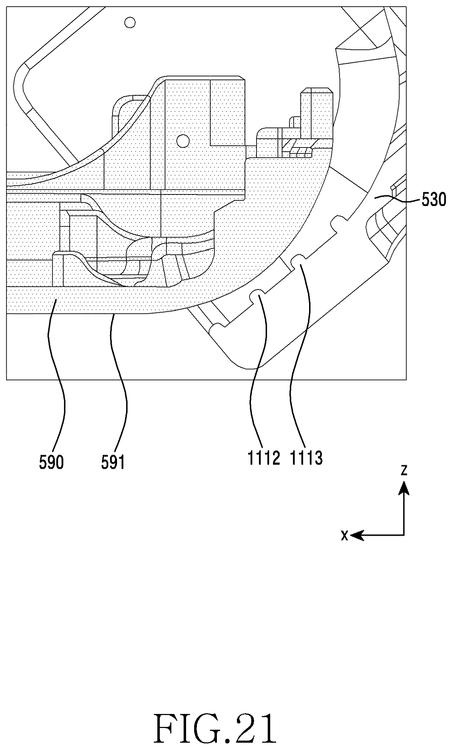

Referring to FIG. 21, according to an embodiment, when the first angle is about 40 degrees, the second protrusion 1112 and the third protrusion 1113 among the plurality of protrusions may have a minimum spacing from the second hinge housing 590. In an example, when the first angle is about 40 degrees, the second protrusion 1112 and the third protrusion 1113 may be disposed at a position having a minimum spacing from the second hinge housing 590.

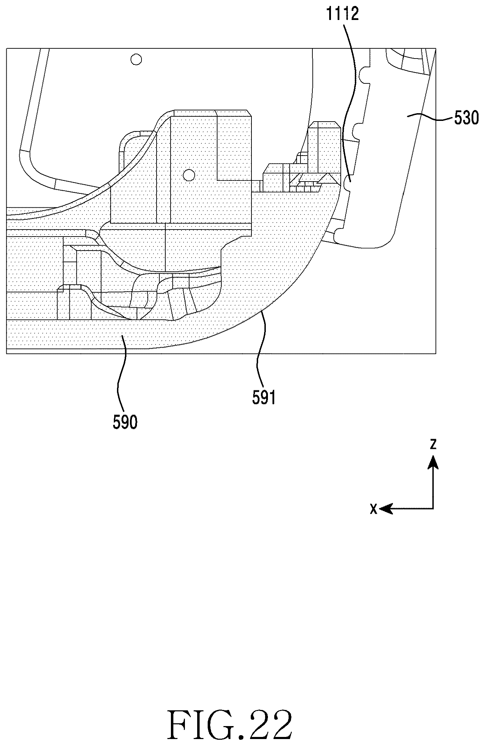

Referring to FIG. 22, according to an embodiment, when the first angle is greater than about 40 degrees and is less than or equal to about 79 degrees, the second protrusion 1112 among the plurality of protrusions may have a minimum spacing from the second hinge housing 590. In an example, when the first angle is greater than about 40 degrees and is less than or equal to about 79 degrees, the second protrusion 1112 may be disposed at a position having a minimum spacing from the second hinge housing 590.

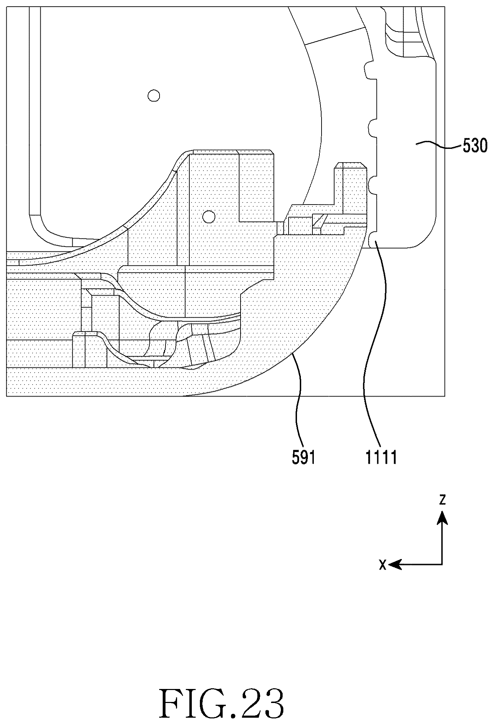

Referring to FIG. 23, according to an embodiment, when the first angle is greater than about 79 degrees and is less than or equal to about 90 degrees, the first protrusion 1111 among the plurality of protrusions may have a minimum spacing from the second hinge housing 590. In an example, when the first angle is greater than about 79 degrees and is less than or equal to about 90 degrees, the first protrusion 1111 may be disposed at a position having a minimum spacing from the second hinge housing 590.

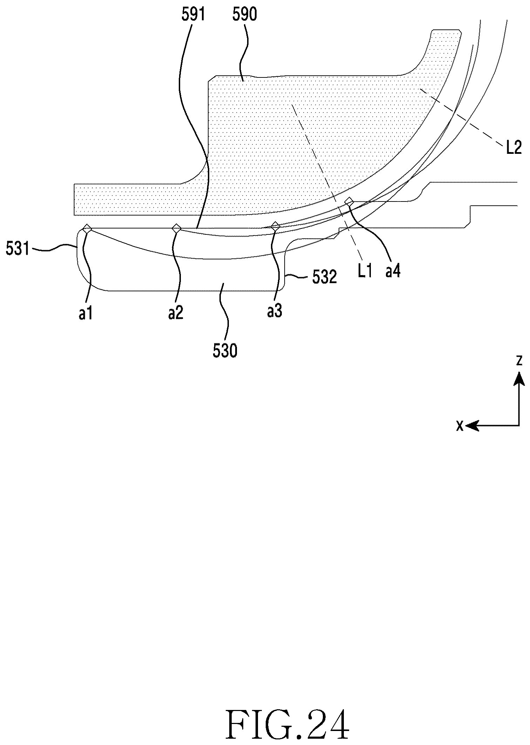

FIG. 24 is a view to explain positions of a plurality of protrusions according to a state of the electronic device according to an embodiment.

The components of FIG. 24 may be referenced to the components of other drawings. The same terms and/or the same reference numerals are used for the same components or substantially the same components as the components of other drawings, and a redundant explanation is omitted.

According to an embodiment, the plurality of protrusions may be disposed in at least one of the third housing 530 or the second housing (for example, the second housing 120 of FIG. 1). Referring to FIGS. 19 and 24, the first protrusion 1111 according to an embodiment may be disposed at a first position a1. In an example, the first position a1 may include the first end 531 of the third housing 530. In an example, the first position a1 may be adjacent to the first end 531 of the third housing 530. In an unfolded state of the electronic device 10 (for example at 0 degrees between the third housing 530 or the second housing), the first protrusion 1111 at first position a1 may be the first protrusion to blocked dust or debris entering from the outside. Further, in a folded state of the electronic device 10 (for example at 79 to 90 degrees between the third housing 530 or the second housing), the first protrusion 1111 at first position a1 may be at the location with the smallest gap towards the hinge housing 590.

According to an embodiment, the third protrusion 1113 may be disposed at a third position a3. In an example, the third position a3 may be adjacent to a position where a rear surface cover (for example, the rear surface cover 150 of FIG. 2) disposed in the third housing 530 is disposed. In an example, the third position a3 may be adjacent to a position where a sub display (for example, the sub display 240 of FIG. 2) disposed in the second housing is disposed. For example, the third position a3 may be positioned between the rear surface cover which is disposed in the third housing 530, and the first position a1. For example, the third position a3 may be positioned between the sub display disposed in the second housing, and the first position a1. In an example, a thickness (for example, a thickness in the z-axis direction) of the housing 530 at the third position a3 may be thicker than a thickness of the housing 530 at the fourth position a4. However, since the third position a3 is a location where the front cutout for back cover attachment begins, the third protrusion 1113 may provide additional thickness for the front cutout.

According to an embodiment, at least one protrusion may be disposed between the first position a1 and the third position a3. For example, at least one protrusion may be disposed at a second position a2. For example, the second protrusion 1112 may be disposed at the second position a2. However, this should not be considered as limiting. In an example, when a distance between the first position a1 and the third position a3 is smaller than a designated first distance, a protrusion may not be disposed between the first position a1 and the third position a3. In an example, when the distance between the first position a1 and the third position a3 is greater than a designated second distance, a plurality of protrusions may be disposed between the first position a1 and the third position a3.

According to an embodiment, at least one protrusion may be disposed at a fourth position a4. For example, the fourth protrusion 1114 may be disposed at the fourth position a4. In an example, the fourth position a4 may include a position between the second end which is opposite to the first end 531 of the third housing 530, and the third position a3. At least one protrusion disposed at the fourth position a4 may prevent or hinder foreign substances from entering the inside of the electronic device. For example, the at least one protrusion disposed at the fourth position a4 may increase a time required for foreign substances to arrive at the inside of the electronic device. However, this should not be considered as limiting. For example, a protrusion may not be disposed at the fourth position a4.

According to an embodiment, a first line L1 and a second line L2 may be virtual lines which are formed with reference to a highly used angle when the state of the electronic device is changed. In an example, a first angle (for example, the first angle of FIG. 20) in a state where the first end 531 of the third housing 530 is disposed on the first line L1 may be about 32.5 degrees. In an example, the first angle (for example, the first angle of FIG. 20) in a state where the first end 531 of the third housing 530 is disposed on the first line L1 may be about 52.5 degrees. However, this should not be considered as limiting.

According to an embodiment, the third position a3 may include a position at which the spacing from the second hinge housing 590 is minimized when the state of the electronic device changes from the unfolded state to a state in which the first end 531 of the third housing 530 moves to the first line L1.

According to an embodiment, the second position a2 may include a position at which the spacing from the second hinge housing 590 is minimized when the state of the electronic device changes from the state in which the first end 532 of the third housing 530 moves to the first line L1 to a state in which the first end 531 of the third housing 530 moves to the second line L2. In other words, if the electronic device is often in an intermediate state at a specific angle between an unfolded and a folded state, the second position a2 can be chosen to be a position of a gap towards the hinge housing being the smallest based on the electronic device being in the intermediate state at the specific angle, e.g. at the specific angle that is most often used.

According to an embodiment, the first position a1 may include a position at which the spacing from the second hinge housing 590 is minimized when the state of the electronic device changes from the state in which the first end 531 of the third housing 530 moves to the second line L2 to a folded state.

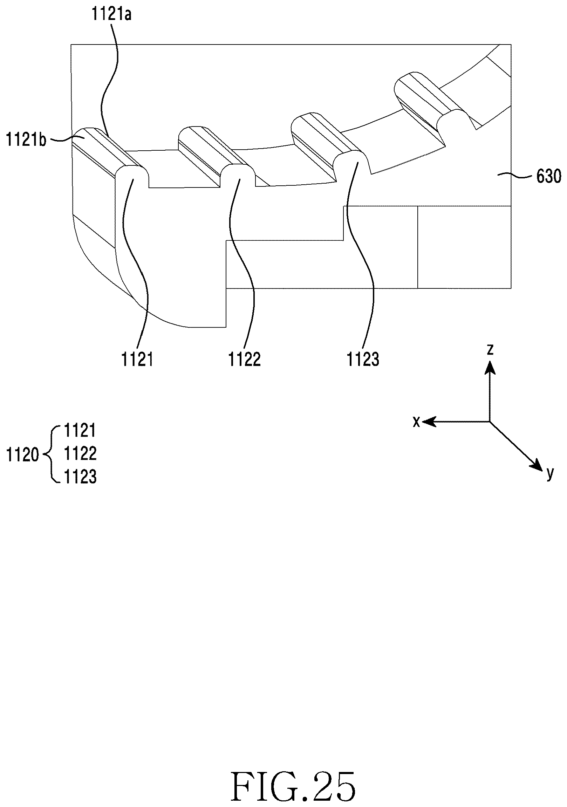

FIG. 25 is a view illustrating a protrusion including a curved surface according to an embodiment.

The components of FIG. 25 may be referenced to the components of other drawings. The same terms and/or the same reference numerals are used for the same components or substantially the same components as the components of other drawings, and a redundant explanation is omitted.

Referring to FIG. 25, edges of a plurality of protrusions 1120 according to an embodiment may include curved surfaces having curvatures. For example, an edge of at least one of a first protrusion 1121, a second protrusion 1122, or a third protrusion 1123 may include a curved surface having a curvature. For example, a first edge of the first protrusion 1121 that faces the second protrusion 1122 may include a first curved surface 1121a having a first curvature. A second edge of the first protrusion 1121 that is opposite to the first edge may include a second curved surface 1121b having a second curvature. For example, the second curvature may be greater than the first curvature.

According to an embodiment, the edges of the plurality of protrusions 1120 includes the curved surfaces having the curvatures, so that foreign substances disposed on the plurality of protrusions 1120 are easily moved between the plurality of protrusions 1120. The edges of the plurality of protrusions 1120 include the curved surfaces having the curvatures, so that a scratch on a second hinge housing (for example, the second hinge housing 590 of FIG. 24) or a damage to the second hinge housing caused by foreign substances disposed on the plurality of protrusions 1120 may be prevented or reduced. For example, an edge of the first protrusion 1121 includes a curved surface, so that foreign substances disposed on the first protrusion 1121 are easily moved to the outside of a third housing 630 and/or a space (for example, a groove) between the first protrusion 1121 and the second protrusion 1122. Although FIG. 25 illustrates only the third housing 630, the descriptions of the third housing 630 may be referenced to the second housing.

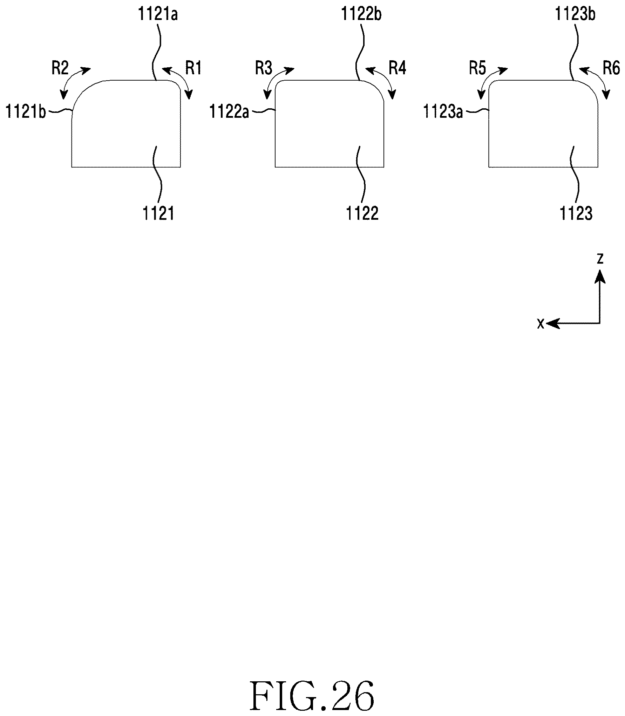

FIG. 26 is a view to explain the plurality of protrusions including the curved surfaces having the curvatures according to an embodiment.

The components of FIG. 26 may be referenced to the components of other drawings. The same terms and/or the same reference numerals are used for the same components or substantially the same components as the components of other drawings, and a redundant explanation is omitted.

Referring to FIG. 26, according to an embodiment, the first edge of the first protrusion 1121 that faces the second protrusion 1122 may include the first curved surface 1121a having the first curvature R1. The second edge of the first protrusion 1121 that is opposite to the first edge may include the second curved surface 1121b having a second curvature R2. In an example, the second curvature R2 may be smaller than the first curvature R1.

According to an embodiment, a curvature of an edge of a protrusion that faces the first protrusion 1121 may be greater than a curvature of an edge that faces the opposite direction of the first protrusion 1121. For example, a third edge of the second protrusion 1122 that faces the first protrusion 1121 may include a third curved surface 1122a having a third curvature R3. A fourth edge of the second protrusion 1122 that is opposite to the third edge may include a fourth curved surface 1122b having a fourth curvature R4. In an example, the fourth curvature R4 may be smaller than the third curvature R3. In an example, a fifth edge of the third protrusion 1123 that faces the second protrusion may include a fifth curved surface 1123a having a fifth curvature R5. A sixth edge of the third protrusion 1123 that is opposite to the fifth edge may include a sixth curved surface 1123b having a sixth curvature R6. In an example, the sixth curvature R6 may be smaller than the fifth curvature R5.

According to an embodiment, the curvatures of the edges facing the opposite direction of the first protrusion 1121 of the plurality of protrusions may become gradually smaller toward the opposite direction. In an example, the third curvature R3 may be larger than the fifth curvature R5.

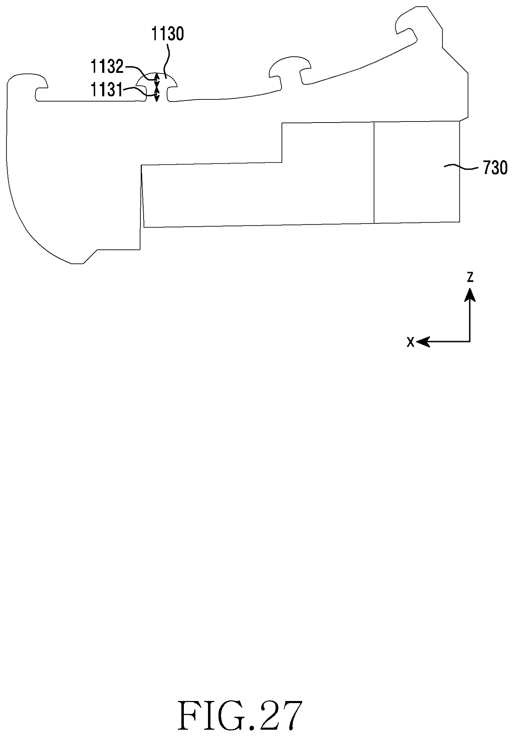

FIG. 27 is a view to explain a shape of a protrusion according to an embodiment.

The components of FIG. 27 may be referenced to the components of other drawings. The same terms and/or the same reference numerals are used for the same components or substantially the same components as the components of other drawings, and a redundant explanation is omitted.

Referring to FIG. 27, a plurality of protrusions 1130 according to an embodiment may include a concave portion. For example, the plurality of protrusions 1130 may include a concave portion which is formed in a direction facing the inside of the plurality of protrusions 1130.

According to an embodiment, the plurality of protrusions 1130 may include a first portion 1131 and a second portion 1132 which is disposed closer to a second hinge housing (for example, the second hinge housing 590 of FIG. 24) than the first portion 1131. The first portion 1131 may be disposed closer to a third housing 730 than the second portion 1132. In an example, the first portion 1131 may be formed by the concave portion. In an example, a width of the first portion 1131 may be smaller than or equal to a width of the second portion 1132.

In the disclosure, descriptions of the third housing may be referenced to the second housing, and descriptions of the second housing may be referenced to the third housing. For example, although

FIG. 27 illustrates only the third housing 730, descriptions of the third housing 730 may be referenced to the second housing.

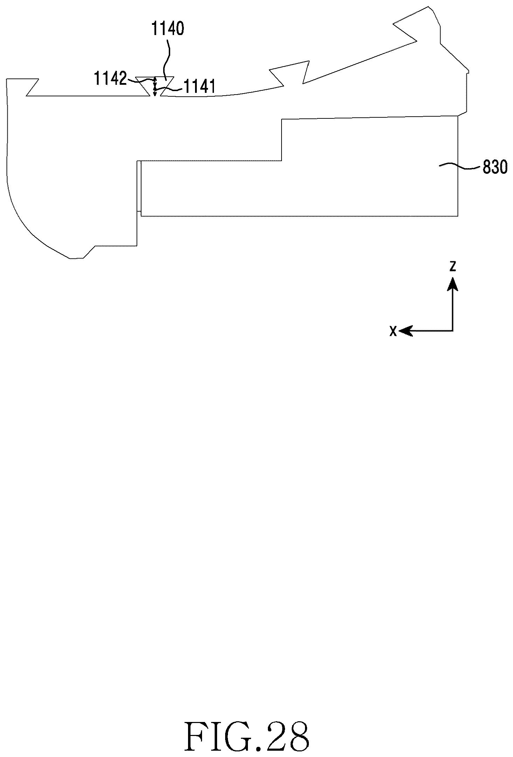

FIG. 28 is a view to explain a shape of a protrusion according to an embodiment.

The components of FIG. 28 may be referenced to the components of other drawings. The same terms and/or the same reference numerals are used for the same components or substantially the same components as the components of other drawings, and a redundant explanation is omitted.

Referring to FIG. 28, a plurality of protrusions 1140 according to an embodiment may include a first portion 1141 and a second portion 1142 which is disposed closer to a second hinge housing (for example, the second hinge housing 590 of FIG. 24) than the first portion 1141. The first portion 1141 may be disposed closer to a third housing 830 than the second portion 1142. In an example, a width of the first portion 1141 may be smaller than or equal to a width of the second portion 1142.

For example, the plurality of protrusions 1140 may have a trapezoidal shape. For example, the width of the plurality of protrusions 1140 may become gradually smaller in a direction (for example, the -z direction) from the second hinge housing (for example, the second hinge housing 590 of FIG. 24) toward the third housing 830. However, this should not be considered as limiting. For example, the plurality of protrusions 1140 may have at least one shape of an N-gonal (i.e., a polygonal shape with N edges) shape, a circular shape, an atypical shape or a diamond shape. Although FIG. 28 illustrates only the third housing 830, descriptions of the third housing 830 may be referenced to the second housing.

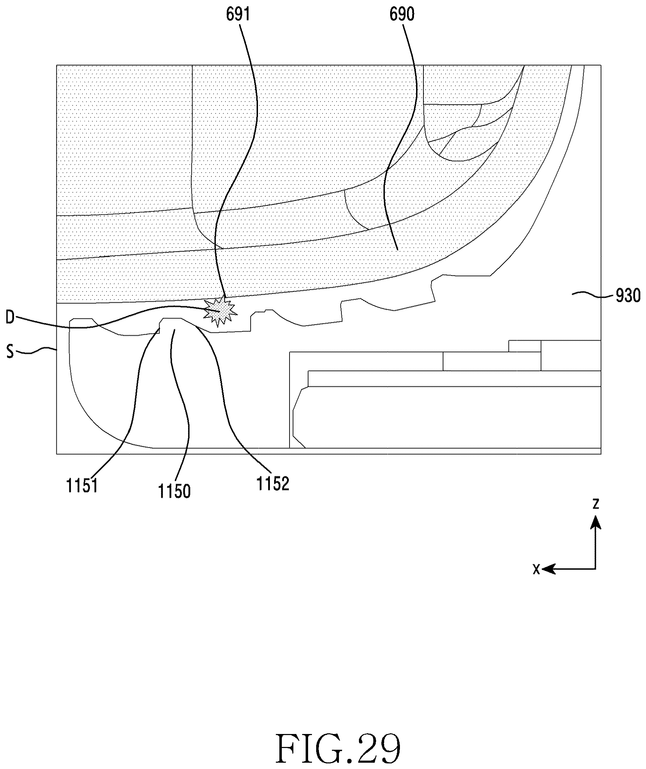

FIG. 29 is a view illustrating a protrusion including an inclined surface according to an embodiment.

The components of FIG. 29 may be referenced to the components of other drawings. The same terms and/or the same reference numerals are used for the same components or substantially the same components as the components of other drawings, and a redundant explanation is omitted.

Referring to FIG. 29, according to an embodiment, a second inclined surface 1152 may be gentler than a first inclined surface 1151. For example, the plurality of protrusions 1150 may include the first inclined surface 1151 which faces a space S between a second housing (for example, the second housing 120 of FIG. 1) and a third housing 930 in an unfolded state (for example, the unfolded state of FIG. 1) of an electronic device (for example, the electronic device 10 of FIG. 1), and the second inclined surface 1152 which is opposite to the first inclined surface 1151. The first inclined surface 1151 may form a first angle with an outer side 691 of a second hinge housing 690. The second inclined surface 1152 may form a second angle with the outer side 691 of the second hinge housing 690. For example, the first angle may be larger than or equal to the second angle.

For example, an angle between the first inclined surface 1151 and an inner side of the third housing 930 may have a third angle. An angle between the second inclined surface 1152 and an inner side of the third housing 930 may have a fourth angle. In an example, the fourth angle may be larger than or equal to the third angle.

According to an embodiment, the second inclined surface 1152 is gentler than the first inclined surface 1151, so that the first inclined surface 1151 may prevent foreign substances D flowing between the plurality of protrusions 1150 from entering the inside of the electronic device (for example, preventing the foreign substance D to flow in the -x direction). The second inclined surface 1152 is gentler than the first inclined surface 1151, so that the second inclined surface 1152 may induce foreign substances D flowing between the plurality of protrusions 1150 to move to the outside of the electronic device (for example, inducing the foreign substance D to flow in the +x direction).

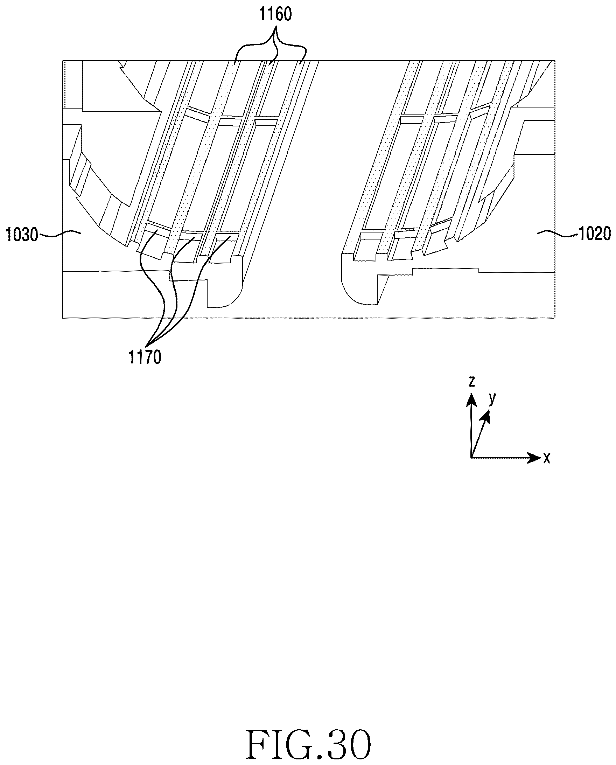

FIG. 30 is a perspective view to explain a partition according to an embodiment.

The components of FIG. 30 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 1) may include a plurality of partitions 1170 disposed between a plurality of protrusions 160. The plurality of partitions 1170 may be disposed to block a region between the plurality of protrusions 1160 at least in part. For example, the plurality of partitions 1170 may be disposed along a direction substantially perpendicular to the longitudinal direction (for example, the y-axis direction) of the plurality of protrusions 1160. However, this should not be considered as limiting. For example, the plurality of partitions 1170 may be disposed to form a certain angle with the longitudinal direction of the plurality of protrusions 1160.

According to an embodiment, the plurality of partitions 1170 may be disposed in at least one of a second housing 1020 or a third housing 1030. For example, the plurality of partitions 1170 may be formed in at least one of the second housing 1020 or the third housing 1030. In an example, the plurality of partitions 1170 may be integrally formed with at least one of the second housing 1020 or the third housing 1030. In an example, the plurality of partitions 1170 may be integrally formed with the plurality of protrusions 1160. In an example, the plurality of partitions 1170 and the plurality of protrusions 1160 may be integrally formed with at least one of the second housing 1020 or the third housing 1030.

According to an embodiment, the plurality of partitions 1170 may protrude from at least one of the second housing 1020 or the third housing 1030. For example, the plurality of partitions 1170 may protrude in a direction from at least one of an inner side of the second housing 1020 or an inner side of the third housing 1030 toward a second hinge housing (for example, the second hinge housing 690 of FIG. 29). In an example, the plurality of partitions 1170 may face an outer side (for example, the outer side 691 of FIG. 29) of the second hinge housing. In an example, the plurality of partitions 1170 may be disposed to be spaced apart from the outer side of the second hinge housing by a certain distance.

According to an embodiment, heights of the plurality of partitions 1170 may be substantially the same as heights of the plurality of protrusions 1160. However, this should not be considered as limiting.

According to an embodiment, the electronic device includes the plurality of partitions 1170 so that foreign substances flowing between the plurality of protrusions 1160 may be prevented from moving in the longitudinal direction (for example, the y-axis direction) of the protrusion 1160, or that such moving may be minimized.

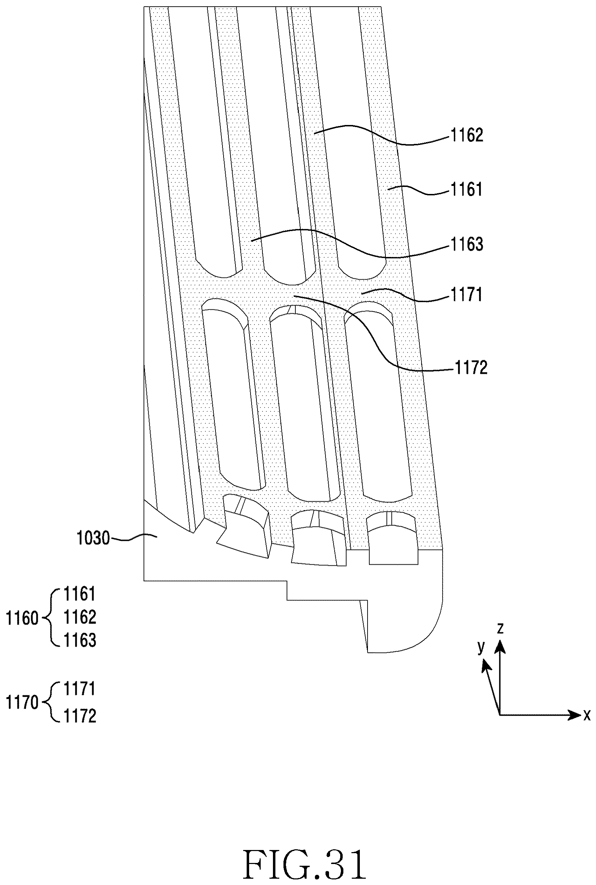

FIG. 31 is a perspective view to explain partitions arranged in parallel according to an embodiment.

The components of FIG. 31 may be referenced to the components of other drawings. The same terms and/or the same reference numerals are used for the same components or substantially the same components as the components of other drawings, and a redundant explanation is omitted.

Referring to FIG. 31, the plurality of partitions 1170 according to an embodiment may include a first partition 1171 disposed between a first protrusion 1161 and a second protrusion 1162, and a second partition 1172 disposed between the second protrusion 1162 and a third protrusion 1163. In an example, the first partition 1171 may be disposed in parallel with the second partition 1172. For example, when the electronic device (for example, the electronic device 10 of FIG. 1) is viewed from a side (for example, in the +x direction), the first partition 1171 and the second partition 1172 may overlap each other. For example, the first partition 1171 and the second partition 1172 may be consecutively disposed. For example, the first partition 1171 and the second partition 1172 may be aligned in the same direction (for example, the x-direction).

According to an embodiment, a width of the first partition 1171 may be substantially the same as a width of the second partition 1172. For example, a width of the first partition 1171 in the longitudinal direction (for example, the y-axis direction) of the plurality of protrusions 1160 may be substantially the same as a width of the second partition 1172 in the longitudinal direction of the plurality of protrusions 1160.

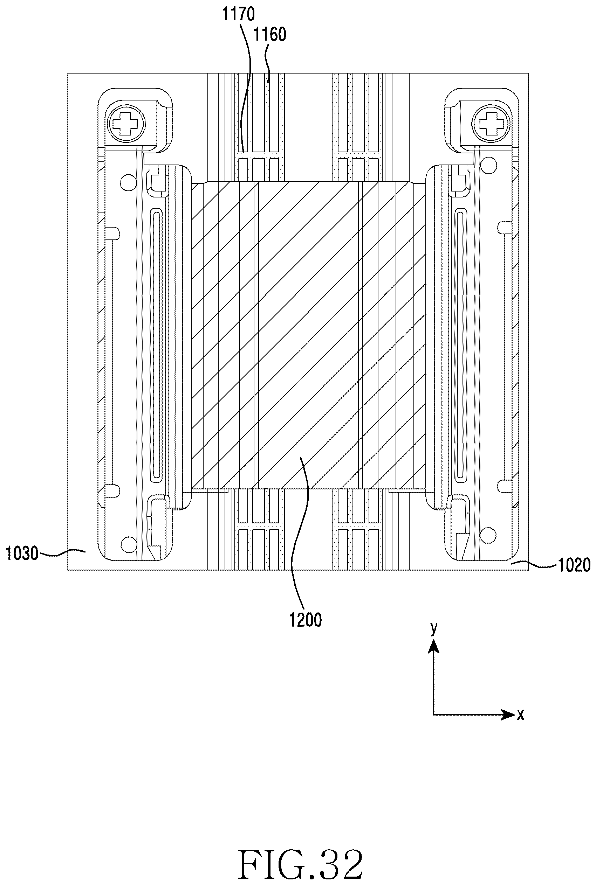

FIG. 32 is a view to explain a relationship between a partition and a flexible printed circuit board according to an embodiment.

The components of FIG. 32 may be referenced to the components of other drawings. The same terms and/or the same reference numerals are used for the same components or substantially the same components as the components of other drawings, and a redundant explanation is omitted.

Referring to FIG. 32, an electronic device (for example, the electronic device 10 of FIG. 1) according to an embodiment may include a flexible printed circuit board 1200 disposed above the plurality of protrusions 1160. When the electronic device is viewed from above, the flexible printed circuit board 1200 may correspond to the plurality of protrusions 1160 at least in part. For example, the flexible printed circuit board 1200 may overlap the plurality of protrusions 1160 at least in part.

According to an embodiment, the plurality of partitions 1170 may be disposed to prevent or reduce an inflow of foreign substances to a component (for example, the flexible printed circuit board 1200 and/or the second hinge assembly) disposed in the electronic device from the outside of the electronic device. For example, the plurality of partitions 1170 may be disposed at a position to prevent an inflow of foreign substances to a component (for example, the flexible printed circuit board 1200 and/or the second hinge assembly) disposed in the electronic device from the outside of the electronic device. For example, the plurality of partitions 1170 may be disposed to form a certain angle with the longitudinal direction of the plurality of protrusions 1160. For example, the plurality of partitions 1170 may be disposed in a direction (for example, the x-axis direction) substantially perpendicular to the longitudinal direction of the plurality of protrusions 1160. For example, when the electronic device is viewed from above, the plurality of partitions 1170 may be disposed with the component disposed therebetween. For example, referring to FIG. 32, when the electronic device is viewed from above, the flexible printed circuit board 1200 may be disposed between the plurality of partitions 1170.

According to an embodiment, the plurality of partitions 1170 may be disposed at a position spaced apart from the component by a certain distance. For example, the plurality of partitions 1170 may be disposed at a position spaced apart from the component by a certain distance in the longitudinal direction (for example, the y-axis direction) of the plurality of protrusions 1160. In an example, the certain distance may be about 0.5 mm to 10 mm. However, this should not be considered as limiting.

According to an embodiment, the plurality of protrusions 1160 may be parallel to one another. For example, the plurality of protrusions 1160 may be disposed to face the same direction. For example, the plurality of protrusions 1160 may be aligned to face the same direction. However, this should not be considered as limiting.

According to an embodiment, the plurality of partitions 1170 may be substantially parallel to one another. For example, the plurality of partitions 1170 may be disposed to face the same direction. For example, the plurality of partitions 1170 may be aligned to face the same direction. However, this should not be considered as limiting.

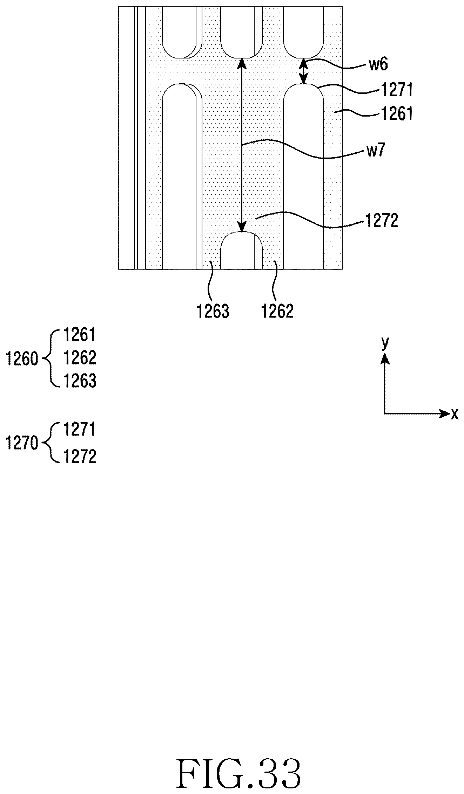

FIG. 33 is a view to explain a thickness of a partition according to an embodiment.

The components of FIG. 33 may be referenced to the components of other drawings. The same terms and/or the same reference numerals are used for the same components or substantially the same components as the components of other drawings, and a redundant explanation is omitted.

Referring to FIG. 33, a third partition 1271 according to an embodiment may be disposed between a first protrusion 1261 and a second protrusion 1262. A fourth partition 1272 may be disposed between the second protrusion 1262 and a third protrusion 1263. In an example, the third partition 1271 may have a sixth width w6 in a longitudinal direction (for example, the y-axis direction) of the plurality of protrusions 1260. The fourth partition 1272 may have a seventh width w7 in the longitudinal direction. In an example, the sixth width w6 and the seventh width w7 may be different from each other. For example, the seventh width w7 may be larger than the sixth width w6. However, this should not be considered as limiting.

According to an embodiment, the third partition 1271 and the fourth partition 1272 may correspond to each other at least in part. For example, the third partition 1271 and the fourth partition 1272 may overlap each other at least in part in a direction (for example, the x-axis direction) substantially perpendicular to the longitudinal direction.

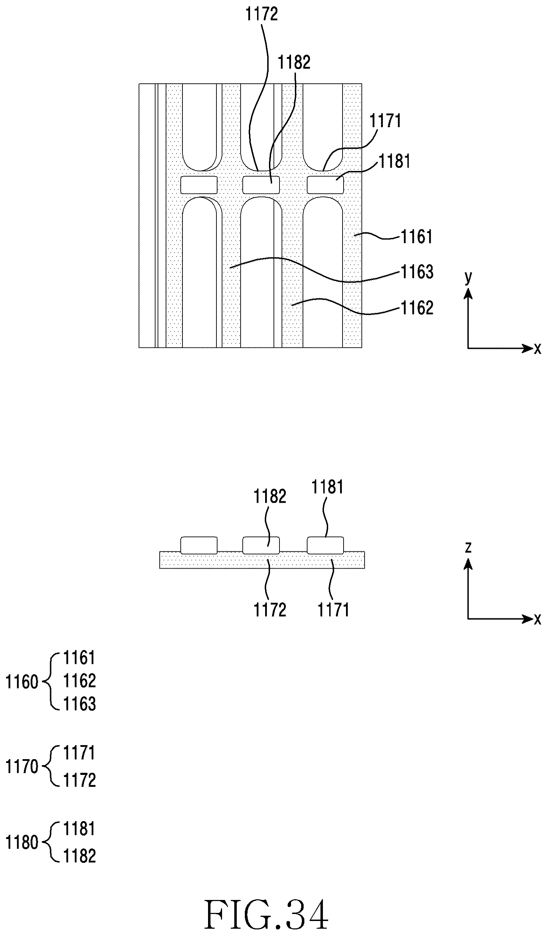

FIG. 34 is a view to explain a bump disposed on a partition according to an embodiment.

The components of FIG. 34 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 1) may include a plurality of bumps 1180 disposed on a plurality of partitions 1170. For example, the plurality of bumps 1180 may be disposed on the plurality of partitions 1170. For example, the plurality of bumps 1180 may be disposed above the plurality of partitions 1170. For example, referring to FIG. 34, a first bump 1181 may be disposed on a first partition 1171 disposed between a first protrusion 1161 and a second protrusion 1162. A second bump 1182 may be disposed on a second partition 1172 disposed between the second protrusion 1162 and a third protrusion 1163. The number of the plurality of bumps is not limited to those illustrated in FIG. 34. For example, the electronic device may omit at least one bump or may further include at least one bump.

According to an embodiment, the plurality of bumps 1180 may protrude from the plurality of partitions. For example, the first bump 1181 may protrude from the first partition 1171. For example, the first bump 1181 may protrude from the first partition 1171 in a direction (for example, +z direction) in which the first partition 1171 protrudes. The second bump 1182 may protrude from the second partition 1172. For example, the second bump 1182 may protrude from the second partition 1172 in a direction (for example, +z direction) in which the second partition 1172 protrudes.

According to an embodiment, a height of the first bump 1181 may be substantially the same as a height of the second bump 1182. However, this should not be considered as limiting.

According to an embodiment, the plurality of bumps 1180 may maintain a distance between a second hinge housing (for example, the second hinge housing 690 of FIG. 29) and the plurality of partitions 1170.

According to an embodiment, the plurality of bumps 1180 may include a polymer material such as rubber or silicone. For example, the plurality of bumps 1180 may include polyurethane (PU). However, this should not be considered as limiting. For example, the plurality of bumps 1180 may include an elastic body of various materials which is bendable. In an embodiment, the plurality of bumps 1180 may include a polymer material such as polyethylene terephthalate (PET), polyurethane (PU) or thermoplastic polyurethane (TPU).

According to an embodiment, the plurality of bumps 1180 may be formed of a soft material so that the plurality of bumps may smoothly move relative to the second hinge housing when the state of the electronic device is changed. Accordingly, the plurality of bumps 1180 may prevent or reduce an operating defect caused by overlapping between the plurality of bumps 1180 and the second hinge housing.

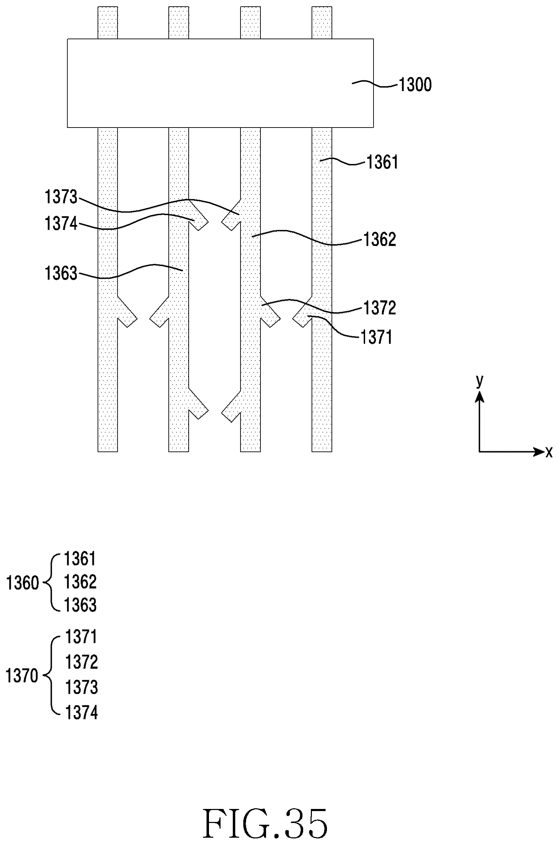

FIG. 35 is a view to explain a partition and a flexible printed circuit board according to an embodiment.

The components of FIG. 35 may be referenced to the components of other drawings. The same terms and/or the same reference numerals are used for the same components or substantially the same components as the components of other drawings, and a redundant explanation is omitted.

Referring to FIG. 35, an electronic device (for example, the electronic device 10 of FIG. 1) may include a first partition 1371 and a second partition 1372 which are disposed between a first protrusion 1361 and a second protrusion 1362. However, this should not be considered as limiting. For example, the electronic device may further include at least one partition. For example, the electronic device may further include a third partition 1373 and a fourth partition 1374 which are disposed between the second protrusion 1362 and a third protrusion 1363.

According to an embodiment, the first partition 1371 may protrude from a side of the first protrusion 1361. The second partition 1372 may protrude from a side of the second protrusion 1362. In an embodiment, the first partition 1371 may face the second partition 1372. For example, the first partition 1371 may protrude in a direction facing the second protrusion 1362, and the second partition 1372 may protrude in a direction facing the first protrusion 1361.

According to an embodiment, the first partition 1371 and the second partition 1372 may be spaced apart from each other. In an example, foreign substance may move between the first partition 1371 and the second partition 1372.

According to an embodiment, the plurality of partitions 1370 may be disposed to prevent or reduce an inflow of foreign substance into a component (for example, the flexible printed circuit board 1300 and/or the second hinge assembly) disposed in the electronic device from the outside of the electronic device, and to discharge foreign substances in the opposite direction of the component. For example, the first partition 1371 and the second partition 1372 may be disposed to face the opposite direction (for example, the -y direction) of the component (for example, the flexible printed circuit board 1300). For example, the first partition 1371 may be disposed to form a certain angle with the first protrusion 1361. The second partition 1372 may be disposed to form a certain angle with the second protrusion 1362. For example, the first protrusion 1361 and the second protrusion 1362 may be disposed to form a certain angle. Movement of foreign substances between the plurality of protrusions 1360 toward a component (for example, the flexible printed circuit board 1300) may be restricted by the plurality of partitions 1370. Foreign substances between the plurality of protrusions 1360 may be induced to move in the opposite direction of the component by the plurality of partitions 1370. For example, foreign substances between the plurality of protrusions 1360 may easily move in the opposite direction of the component by the plurality of partitions 1370. For example, foreign substances between the plurality of protrusions 1360 may easily move in the -y- direction, while being prevented or hindered to move in the +y-direction by the plurality of partitions 1370.

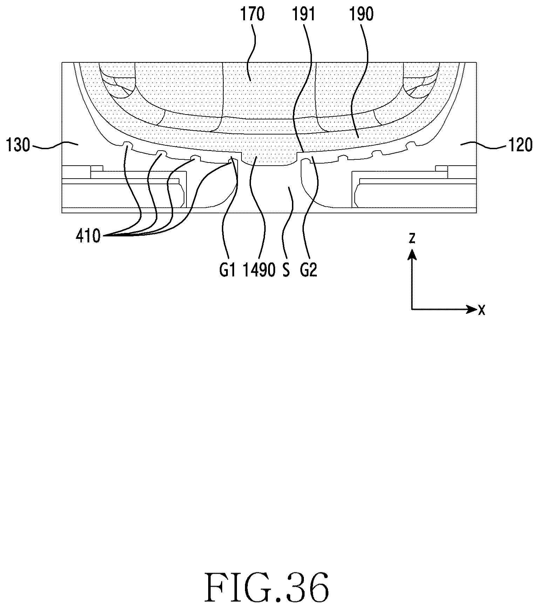

FIG. 36 is a cross-sectional view to explain a convex portion disposed in a second hinge housing according to an embodiment.

The components of FIG. 36 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 1) may include a convex portion 1490. The convex portion 1490 may be disposed between a second housing 120 and a third housing 130 in an unfolded state (for example, the unfolded state of FIG. 1) of the electronic device. For example, the convex portion 1490 may be disposed in a space S which is formed by the second housing 120 and the third housing 130 being spaced apart from each other.

According to an embodiment, the convex portion 1490 may be disposed to block an inflow of foreign substances into the inside of the electronic device in the unfolded state of the electronic device. For example, the convex portion 1490 may be disposed to block at least one of a first gap G1 between the second housing 120 and a second hinge housing 190 or a second gap G2 between the third housing 130 and the second hinge housing 190. For example, the convex portion 1490 may protrude from the second hinge housing 190. For example, the convex portion 1490 may protrude from an outer side 191 of the second hinge housing 190. For example, the convex portion 1490 may protrude to face the space S between the second housing 120 and the third housing 130. For example, the convex portion 1490 may protrude in the opposite direction (for example, the -z direction) of the direction in which the plurality of protrusions 410 protrude. For example, the convex portion 1490 may protrude in a direction facing the opposite of the second hinge assembly 170.

According to an embodiment, the convex portion 1490 may be integrally formed with the second hinge housing 190. However, this should not be considered as limiting. For example, the convex portion 1490 may be a member that is separate from the second hinge housing 190. For example, the convex portion 1490 may be attached to the second hinge housing 190.

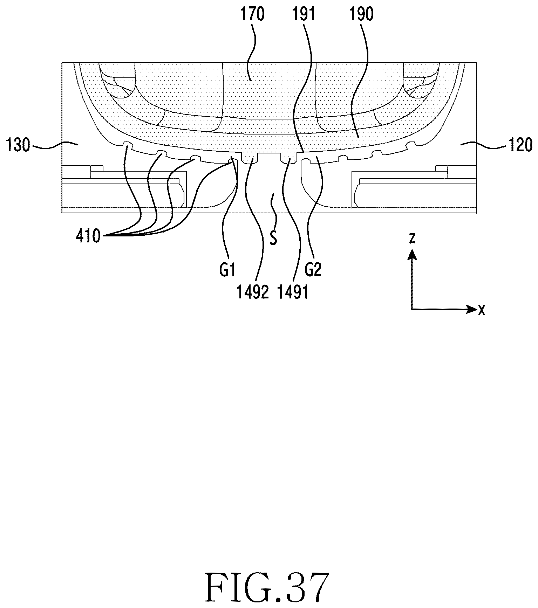

FIG. 37 is a cross-sectional view to explain a convex portion according to an embodiment.

The components of FIG. 37 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 1) may include a plurality of convex portions. For example, the electronic device may include a first convex portion 1491 and a second convex portion 1492.

According to an embodiment, the first convex portion 1491 and the second convex portion 1492 may be disposed between a second housing 120 and a third housing 130 in an unfolded state of the electronic device (for example, the unfolded state of FIG. 1). For example, the first convex portion 1491 and the second convex portion 1492 may be disposed in a space S which is formed by the second housing 120 and the third housing 130 being spaced apart from each other.

According to an embodiment, the first convex portion 1491 and the second convex portion 1492 may be disposed to block an inflow of foreign substances into the electronic device in the unfolded state of the electronic device. For example, the first convex portion 1491 may be disposed to block a first gap G1 between the second housing 120 and the second hinge housing 190. For example, the second convex portion 1492 may be disposed to block a second gap G2 between the third housing 130 and the second hinge housing 190. For example, the first convex portion 1491 and the second convex portion 1492 may protrude from the second hinge housing 190. For example, the first convex portion 1491 and the second convex portion 1492 may protrude from the outer side 191 of the second hinge housing 190. For example, the first convex portion 1491 and the second convex portion 1492 may protrude toward the space S between the second housing 120 and the third housing 130. For example, the first convex portion 1491 and the second convex portion 1492 may protrude in the opposite direction (for example, the -z direction) of the direction in which the plurality of protrusions 410 protrude. For example, the first convex portion 1491 and the second convex portion 1492 may protrude in the direction facing the opposite of the second hinge assembly 170.

According to an embodiment, the first convex portion 1491 and the second convex portion 1492 may be disposed to be spaced apart from each other. For example, the first convex portion 1491 may be disposed to be spaced apart from the second convex portion 1492 by a certain distance. For example, the first convex portion 1491 may be disposed to be spaced apart from the second convex portion 1492 by a certain distance spanning in the x-direction.

According to an embodiment, the first convex portion 1491 and the second convex portion 1492 may be disposed along the longitudinal direction of the second hinge housing 190. In an example, the first convex portion 1491 and the second convex portion 1492 may be disposed along the longitudinal direction of the second hinge assembly 170. For example, the first convex portion 1491 and the second convex portion 1492 may be disposed along the y-direction of the second hinge assembly 170. For example, the first convex portion 1491 and the second convex portion 1492 may be disposed substantially in parallel with each other.

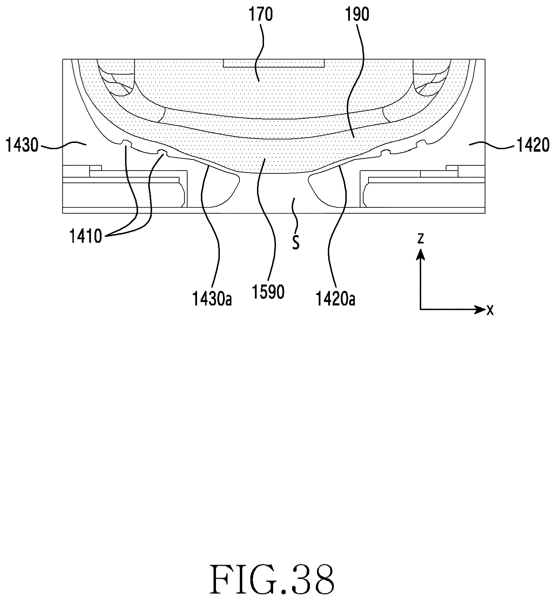

FIG. 38 is a cross-sectional view illustrating a convex portion according to an embodiment.

The components of FIG. 38 may be referenced to the components of other drawings. The same terms and/or the same reference numerals are used for the same components or substantially the same components as the components of other drawings, and a redundant explanation is omitted.

According to an embodiment, an electronic device (for example, the electronic device 10 of FIG. 1) may include a third convex portion 1590. The third convex portion 1590 may correspond to at least one of an inner side 1420a of a second housing 1420 or an inner side 1430a of a third housing 1430. For example, the third convex portion 1590 may face at least one of the inner side 1420a of the second housing 1420 or the inner side 1430a of the third housing 1430. For example, the third convex portion 1590 may overlap at least one of the inner side 1420a of the second housing 1420 or the inner side 1430a of the third housing 1430.

According to an embodiment, a thickness of the third convex portion 1590 may become gradually larger toward a space S between the second housing 1420 and the third housing 1430. For example, a thickness of a portion of the third convex portion 1590 corresponding to the space S may be thicker than a thickness of a portion of the third convex portion 1590 facing the inner side 1420a of the second housing 1420. For example, the thickness of the portion of the third convex portion 1590 corresponding to the space S may be thicker than a thickness of a portion of the third convex portion 1590 facing the inner side 1430a of the third housing 1430.

According to an embodiment, the third convex portion 1590 may protrude from an outer side of the second hinge housing 190. For example, the third convex portion 1590 may protrude toward the space S between the second housing 1420 and the third housing 1430. For example, the third convex portion 1590 may protrude in the opposite direction (for example, the -z direction) of the direction in which the plurality of protrusions 1410 protrude. For example, the third convex portion 1590 may protrude in a direction facing the opposite of the second hinge assembly 170. According to an embodiment, the third convex portion 1590 may be seamlessly extended from an outer side of the second hinge housing 190.

According to an embodiment, the plurality of protrusions 1410 may not be disposed on at least one of the inner side 1420a of the second housing 1420 or the inner side 1430a of the third housing 1430 facing the third convex portion 1590. For example, in the unfolded state of the electronic device (for example, the unfolded state of FIG. 1), the third convex portion 1590 may be disposed between the plurality of protrusions 1410 disposed in the second housing 1420 and the plurality of protrusions 1410 disposed in the third housing 1430.

As described above, an electronic device (for example, the electronic device 10 of FIG. 1) may include a foldable housing (for example, the housing 100 of FIG. 1) which includes a first housing (for example, the first housing 110 of FIG. 1), a second housing (for example, the second housing 120 of FIG. 1), and a third housing (for example, the third housing 130 of FIG. 1). The electronic device may include a first hinge structure (for example, the first hinge assembly 160 of FIG. 3) which rotatably connects the first housing and the second housing. The electronic device may include a second hinge structure (for example, the second hinge assembly 170 of FIG. 3) which rotatably connects the second housing and the third housing. The electronic device may include a first hinge housing (for example, the first hinge housing 180 of FIG. 7) to cover at least a part of the first hinge structure. The electronic device may include a second hinge housing (for example, the second hinge housing 190 of FIG. 7) which covers at least a part of the second hinge structure and has a width wider than the first hinge housing. The electronic device may include a plurality of protrusions (for example, the plurality of protrusions 410 of FIG. 10) which are disposed on at least one of an inner surface (for example, the inner side 120a of FIG. 10) of the second housing or an inner surface (for example, the inner side 130a of FIG. 10) of the third housing, and protrude in a direction facing the second hinge housing in an unfolded state of the electronic device.

According to an embodiment, a width of the second hinge structure may be larger than a width of the second hinge structure.

According to an embodiment, the plurality of protrusions (for example, the plurality of protrusions 410 of FIG. 10) may be formed to be substantially parallel to a longitudinal direction (for example, the longitudinal direction LD of FIG. 11) of the second hinge housing. The plurality of protrusions may be spaced apart from the outer side of the second hinge housing by a certain distance.

According to an embodiment, the plurality of protrusions may include a first protrusion, a second protrusion, and a third protrusion which are disposed in sequence in a direction from a first end of the third housing that corresponds to the second hinge housing toward a second end of the third housing.

According to an embodiment, the first protrusion may have a first height in a direction from the inner surface of the third housing toward the second hinge housing. The second protrusion may have a second height in the direction from the inner surface of the third housing toward the second hinge housing. The third protrusion may have a third height in the direction from the inner surface of the third housing toward the second hinge housing. The first height may be higher than or equal to the third height.

According to an embodiment, a first gap between the first protrusion and the second protrusion may be larger than or equal to a second gap between the second protrusion and the third protrusion.

According to an embodiment, the electronic device may further include a first groove which is formed between the first protrusion and the second protrusion, and a second groove which is formed between the second protrusion and the third protrusion. The first groove may have a first depth in the opposite direction of a direction in which the plurality of protrusions protrude. The second groove may have a second depth in the opposite direction of the direction in which the plurality of protrusions protrude. The first depth may be larger than or equal to the second depth.

According to an embodiment, a periphery of the third housing may include the first protrusion. The periphery of the third housing may include a periphery of the first protrusion.

According to an embodiment, edges of the plurality of protrusions may include curved surfaces having curvatures. A first edge of the first protrusion that faces the second protrusion may include a first curved surface having a first curvature. A second edge of the first protrusion that is opposite to the first edge may include a second curved surface having a second curvature. The second curvature may be smaller than the first curvature.

According to an embodiment, a third edge of the second protrusion that faces the first protrusion may include a third curved surface having a third curvature. A fourth edge of the second protrusion that is opposite to the third edge may include a fourth curved surface having a fourth curvature. The fourth curvature may be smaller than the third curvature.

According to an embodiment, at least one of the plurality of protrusions may include at least one of a sweeper, a brush, or a sealing member.

According to an embodiment, the plurality of protrusions may include a first portion and a second portion which is disposed closer to the second hinge housing than the first portion. A width of the first portion may be smaller than or equal to a width of the second portion.

According to an embodiment, the plurality of protrusions may include a first inclined surface which faces a space between the second housing and the third housing in the unfolded state of the electronic device, and has a first angle with an outer side of the second hinge housing. The plurality of protrusions may include a second inclined surface which has a second angle with the outer side of the second hinge housing. The first angle may be larger than or equal to the second angle.

According to an embodiment, the electronic device may include a plurality of partitions which are disposed between the plurality of protrusions to block a region between the plurality of protrusions at least in part.

According to an embodiment, the electronic device may include a convex portion which is disposed between the second housing and the third housing in the unfolded state of the electronic device. The convex portion may protrude from an outer side of the second hinge housing to block at least one of a gap between the second housing and the second hinge housing or a gap between the third housing and the second hinge housing.

According to an embodiment, in the unfolded state of the electronic device, the first housing and the second housing may be disposed to cover the first hinge housing. In the unfolded state of the electronic device, the second housing and the third housing may be disposed to cover a part of the second hinge housing.

As described above, a multi-foldable electronic device according to an embodiment may include a housing which includes a first housing, a second housing, and a third housing. The multi-foldable electronic device may include a first hinge assembly which rotatably connects the first housing and the second housing. The multi-foldable electronic device may include a second hinge assembly which rotatably connects the second housing and the third housing. The multi-foldable electronic device may include a first hinge housing to cover at least a part of the first hinge assembly. The multi-foldable electronic device may include a second hinge housing which covers at least a part of the second hinge assembly and has a width wider than the first hinge housing. The multi-foldable electronic device may include a first dustproof member which is disposed on at least one of an inner side of the first housing or a first inner side of the second housing which faces an outer side of the first hinge housing in an unfolded state of the electronic device. The multi-foldable electronic device may include a plurality of second dustproof members which are disposed on at least one of a second inner side of the second housing that faces an outer side of the second hinge housing in the unfolded state of the multi-foldable electronic device, or an inner side of the third housing that faces the outer side of the second hinge housing, and protrude in a direction facing the second hinge housing.

According to an embodiment, the first dustproof member may be different from the second dustproof member.

According to an embodiment, at least one of the plurality of second dustproof members may include at least one of a protrusion, a sweeper, a brush, or a sealing member.

According to an embodiment, the plurality of second dustproof members may be disposed with the longitudinal direction of the second hinge housing as its longitudinal direction, and may be spaced apart from the outer side of the second hinge housing by a certain distance.

According to an embodiment, in the unfolded state of the electronic device, the first housing and the second housing may be disposed to cover the first hinge housing, and the second housing and the third housing may be disposed to cover a part of the second hinge housing.

In addition to the foregoing explanations, the following enumerated aspects 1 to 15 are also relevant for the present disclosure:
Aspect 1: An electronic device comprising: a foldable housing comprising a first housing, a second housing, and a third housing; a first hinge structure rotatably connecting the first housing and the second housing; a second hinge structure rotatably connecting the second housing and the third housing; a first hinge housing accommodating at least a portion of the first hinge structure; a second hinge housing accommodating at least a portion of the second hinge structure and has a width wider than the first hinge housing; and a plurality of protrusions disposed on at least one of an inner surface of the second housing or an inner surface of the third housing, and protruding in a direction facing the second hinge housing in an unfolded state of the electronic device.

This has the advantage that foreign objects are effectively prevented from entering the device and causing damage. In particular, there is the advantage that foreign objects are prevented from entering a wide hinge structure that enables multi-folding (folding of a device more than once), for example when the gap between the second hinge housing and the second and/or third housing varies during a folding movement of the device.

Aspect 2: The electronic device of aspect 1, wherein the plurality of protrusions are formed to be substantially parallel to a longitudinal direction of the second hinge housing.

Advantageously, the debris ingress prevention performance of the protrusion(s) is optimized.

Aspect 3: The electronic device of aspect 1 or 2, wherein the plurality of protrusions comprises a first protrusion, a second protrusion, and a third protrusion disposed in sequence in a direction from a first end of the third housing that overlaps the second hinge housing toward a second end of the third housing.

Aspect 4: The electronic device of any of aspects 1 to 3, wherein the first protrusion has a first height in a direction from the inner surface of the third housing toward the second hinge housing, wherein the second protrusion has a second height in the direction from the inner surface of the third housing toward the second hinge housing, wherein the third protrusion has a third height in the direction from the inner surface of the third housing toward the second hinge housing, and wherein the first height is higher than or equal to the second height and the third height.

This has the advantage that the first protrusion effectively prevents foreign object ingress, particularly when the device is closed (folded), and the first protrusion is the primary or only protrusion preventing ingress, and further, during a folding movement of the device, a gap/distance between the first protrusion and the second hinge housing varies/increases (for example, the gap increases as compared to when the device is fully closed (and/or fully open)). Also, the additional protrusions of different height advantageously facilitate movement of foreign objects that entered the device in a desired direction, e.g., out of the device or out of a contact region with a display surface of the device to prevent scratches.

Aspect 5: The electronic device of any of aspects 1 to 4, wherein a first gap between the first protrusion and the second protrusion is larger than or equal to a second gap between the second protrusion and the third protrusion.

This has the advantage that any ingressed debris is prevented from rubbing strongly against the hinge housing. In particular, when potential foreign objects enter and potentially pass through the protrusions and gaps/grooves successively, the larger foreign objects can be effectively trapped without strong rubbing in the first groove/gap, for example when compared to smaller foreign objects trapped in successive gaps/grooves. Again, movement of foreign objects that entered the device can be facilitated in a desired direction.

Aspect 6: The electronic device of any of aspects 1 to 5, further comprising a first groove formed between the first protrusion and the second protrusion, and a second groove formed between the second protrusion and the third protrusion, wherein the first groove has a first depth in the opposite direction of a direction in which the plurality of protrusions protrude, wherein the second groove has a second depth in the opposite direction of the direction in which the plurality of protrusions protrude, wherein the first depth is larger than or equal to the second depth.

This has the advantage to allow any ingressed debris to better settle in the first groove space and minimize further ingression of the debris as well as minimize rubbing. Again, movement of foreign objects that entered the device can be facilitated in a desired direction.

The advantages of aspect 5 may be understood to also apply to aspect 6 and vice versa.

Aspect 7: The electronic device of any of aspects 1 to 6, wherein a periphery of the third housing comprises the first protrusion.

Advantageously, ingress prevention is further improved. Particularly, by positioning the protrusion at the periphery, ingress of foreign objects is advantageously avoided in various (folding) states of the electronic device.

Aspect 8: The electronic device of aspects 1 to 7, wherein edges of the plurality of protrusions comprise curved surfaces having curvatures, wherein a first edge of the first protrusion that faces the second protrusion comprises a first curved surface having a first curvature, wherein a second edge of the first protrusion that is opposite to the first edge comprises a second curved surface having a second curvature, and wherein the second curvature is smaller than the first curvature.

This has the advantage to encourage debris to move into the groove, e.g., movement of debris that entered the device can be facilitated in a desired direction.

Aspect 9: The electronic device of any of aspects 1 to 8, wherein a third edge of the second protrusion that faces the first protrusion comprises a third curved surface having a third curvature, wherein a fourth edge of the second protrusion that is opposite to the third edge comprises a fourth curved surface having a fourth curvature, and wherein the fourth curvature is smaller than the third curvature.

This has the advantage to control the direction of foreign object movement, for example to encourage debris to move outwards rather than inwards.

Aspect 10: The electronic device of any of aspects 1 to 9, wherein at least one of the plurality of protrusions comprises at least one of a sweeper, a brush, or a sealing member.

Advantageously, foreign object ingression is prevented, while the surface of a hinge housing or other components of the electronic device are prevented from being scratched.

Aspect 11: The electronic device of any of aspects 1 to 10, wherein the plurality of protrusions comprise a first portion and a second portion disposed closer to the second hinge housing than the first portion, and wherein a width of the first portion is smaller than or equal to a width of the second portion.

Advantageously, foreign objects ingressed in the device can be captured by the protrusions and kept away from a hinge housing or other components of the electronic device that are thus prevented from being scratched.

Aspect 12: The electronic device of any of aspects 1 to 11, wherein the plurality of protrusions comprise: a first inclined surface facing a space between the second housing and the third housing in the unfolded state of the electronic device, and has a first angle with an outer side of the second hinge housing; and a second inclined surface having a second angle with the outer side of the second hinge housing, and wherein the first angle is larger than or equal to the second angle.

This has the advantage to control the direction of foreign object movement, for example to encourage debris to move outwards rather than inwards.

Aspect 13: The electronic device of any of aspects 1 to 12, comprising a plurality of partitions disposed between the plurality of protrusions to at least partially block a region between the plurality of protrusions.

This has the advantage to improve reliability of the foreign object ingression prevention and to avoid foreign object ingression in a direction essentially perpendicular to a longitudinal direction of the protrusions (and eventually the hinge assembly or hinge housing).

Aspect 14: The electronic device of any of aspects 1 to 13, comprising a convex portion disposed between the second housing and the third housing in the unfolded state of the electronic device, and protruding from an outer side of the second hinge housing to block at least one of a gap between the second housing and the second hinge housing or a gap between the third housing and the second hinge housing.

This has the advantage to further prevent foreign objects from entering the device and causing damage, wherein the convex portion can be used in addition to the plurality of protrusions as an improvement of the hinge housing.

Aspect 15: The electronic device of any of aspects 1 to 14, wherein a width of the second hinge structure is larger than a width of the first hinge structure.

Advantageously, multi-folding is enabled and a larger unfolded form or smaller folded form of the device through folding movement is provided.

In the above-described specific embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

In the disclosure, such phrase as "including at least one of a, b, or c" may refer to "including only a", "including only b", "including only c", "including a combination of two or more elements" (including a and b, including b and c, including a and c, "including all of a, b, c).

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. An electronic device comprising:
a foldable housing comprising a first housing, a second housing, and a third housing;
a first hinge structure rotatably connecting the first housing and the second housing;
a second hinge structure rotatably connecting the second housing and the third housing;
a first hinge housing accommodating at least a portion of the first hinge structure;
a second hinge housing accommodating at least a portion of the second hinge structure and having a width wider than the first hinge housing; and
a plurality of protrusions disposed on at least one of an inner surface of the second housing or an inner surface of the third housing, and protruding in a direction facing the second hinge housing in an unfolded state of the electronic device.

2. The electronic device of claim 1, wherein the plurality of protrusions are formed to be substantially parallel to a longitudinal direction of the second hinge housing.

3. The electronic device of claim 1, wherein the plurality of protrusions comprises a first protrusion, a second protrusion, and a third protrusion disposed in sequence in a direction from a first end of the third housing that overlaps the second hinge housing toward a second end of the third housing.

4. The electronic device of claim 3, wherein the first protrusion has a first height in a direction from the inner surface of the third housing toward the second hinge housing,
wherein the second protrusion has a second height in the direction from the inner surface of the third housing toward the second hinge housing,
wherein the third protrusion has a third height in the direction from the inner surface of the third housing toward the second hinge housing, and
wherein the first height is higher than or equal to the second height and the third height.

5. The electronic device of claim 3, wherein a first gap between the first protrusion and the second protrusion is larger than or equal to a second gap between the second protrusion and the third protrusion.

6. The electronic device of claim 3, further comprising a first groove formed between the first protrusion and the second protrusion, and a second groove formed between the second protrusion and the third protrusion,
wherein the first groove has a first depth in the opposite direction of a direction in which the plurality of protrusions protrude,
wherein the second groove has a second depth in the opposite direction of the direction in which the plurality of protrusions protrude,
wherein the first depth is larger than or equal to the second depth.

7. The electronic device of claim 3, wherein a periphery of the third housing comprises the first protrusion.

8. The electronic device of claim 7, wherein edges of the plurality of protrusions comprise curved surfaces having curvatures,
wherein a first edge of the first protrusion that faces the second protrusion comprises a first curved surface having a first curvature,
wherein a second edge of the first protrusion that is opposite to the first edge comprises a second curved surface having a second curvature, and
wherein the second curvature is smaller than the first curvature.

9. The electronic device of claim 3, wherein a third edge of the second protrusion that faces the first protrusion comprises a third curved surface having a third curvature,
wherein a fourth edge of the second protrusion that is opposite to the third edge comprises a fourth curved surface having a fourth curvature, and
wherein the fourth curvature is smaller than the third curvature.

10. The electronic device of claim 1, wherein at least one of the plurality of protrusions comprises at least one of a sweeper, a brush, or a sealing member.

11. The electronic device of claim 1, wherein the plurality of protrusions comprise a first portion and a second portion disposed closer to the second hinge housing than the first portion, and
wherein a width of the first portion is smaller than or equal to a width of the second portion.

12. The electronic device of claim 1, wherein the plurality of protrusions comprise: a first inclined surface facing a space between the second housing and the third housing in the unfolded state of the electronic device, and has a first angle with an outer side of the second hinge housing; and a second inclined surface having a second angle with the outer side of the second hinge housing, and
wherein the first angle is larger than or equal to the second angle.

13. The electronic device of claim 1, comprising a plurality of partitions disposed between the plurality of protrusions to at least partially block a region between the plurality of protrusions.

14. The electronic device of claim 1, comprising a convex portion disposed between the second housing and the third housing in the unfolded state of the electronic device, and protruding from an outer side of the second hinge housing to block at least one of a gap between the second housing and the second hinge housing or a gap between the third housing and the second hinge housing.

15. The electronic device of claim 1, wherein a width of the second hinge structure is larger than a width of the first hinge structure.
